# EUROPÄISCHE PATENTSCHRIFT

(11) **EP 4 373 377 B1**
(45) Veröffentlichungstag und Bekanntmachung des Hinweises auf die Patenterteilung: **16.07.2025**
(21) Anmeldenummer: 21749174.5
(22) Anmeldetag: 23.07.2021
(51) Int. Cl.: A47L 11/40

(54) **SELBSTFAHRENDES UND SELBSTLENKENDES BODENREINIGUNGSGERÄT UND BODENREINIGUNGSSYSTEM**
SELF-PROPELLED AND SELF-STEERING FLOOR CLEANING MACHINE AND FLOOR CLEANING SYSTEM
APPAREIL DE NETTOYAGE DE SOL ET SYSTÈME DE NETTOYAGE DE SOL AUTOPROPULSÉAUTOGUIDÉ

(43) Veröffentlichungstag der Anmeldung: 29.05.2024
(73) Patentinhaber: Alfred Kärcher SE & Co. KG, 71364 Winnenden (DE)
(72) Erfinder: DRUST, Manuel, 71364 Winnenden (DE); VLASOV, Fedor, 71364 Winnenden (DE); HÖNNIGE, Heiko, 71364 Winnenden (DE); KOHLER, Norman, 71364 Winnenden (DE); HOFNER, Christian, 71364 Winnenden (DE); SCHURIG, Fabian, 80939 München (DE); HINZ, Gereon, 80939 München (DE)
(74) Vertreter: DTS Patent- und Rechtsanwälte PartmbB
(86) Internationale Anmeldenummer: PCT/EP2021/070753
(87) Internationale Veröffentlichungsnummer: WO 2023/001391

(56) Entgegenhaltungen:
- EP-A2- 0 358 628
- EP-A2- 2 387 931
- US-A1- 2017 071 436
- US-A1- 2020 288 936

## Beschreibung

Die vorliegende Erfindung betrifft ein selbstfahrendes und selbstlenkendes Bodenreinigungsgerät, umfassend ein Fahrwerk zum Verfahren auf der Bodenfläche, mindestens eine Reinigungseinrichtung zum Reinigen der Bodenfläche, eine Steuereinrichtung und eine Sensoreinrichtung, wobei die Steuereinrichtung ausgebildet und eingerichtet ist, abhängig von mindestens einem Signal der Sensoreinrichtung eine Lokalisation und/oder eine Navigation des Bodenreinigungsgerätes in einer Umgebung vorzunehmen.

Außerdem betrifft die Erfindung ein Bodenreinigungssystem mit einem Bodenreinigungsgerät und einer Andockstation.

Mit einem derartigen Bodenreinigungsgerät kann eine autonome Reinigung der Bodenfläche durchgeführt werden. Zu diesem Zweck verfährt das Bodenreinigungsgerät unter Ansteuerung durch die Steuereinheit mit dem Fahrwerk über die Bodenfläche. Schmutz kann mittels der Reinigungseinrichtung von der Bodenfläche abgelöst und vorzugsweise von dieser aufgenommen werden. Beispielsweise ist ein Vorratsbehälter für eine Reinigungsflüssigkeit zum Benetzen der Bodenfläche vorgesehen. Die Reinigungseinrichtung kann zum Beispiel mindestens eine Reinigungswalze oder eine Tellerbürste zum Ablösen von Schmutz umfassen. Ein Gemisch aus Schmutz und Reinigungsflüssigkeit kann zum Beispiel mittels einer Saugleiste aufgenommen und in einen Schmutzflüssigkeitsbehälter überführt werden.

Es ist bekannt, dass die Sensoreinrichtung verschiedenartige Sensoreinheiten zum Erfassen der Umgebung umfassen kann. Hierzu zählen zum Beispiel Kameras, zum Beispiel RGB-Kameras, Infrarot-Sensoreinheiten, Ultraschall-Sensoreinheiten, Stereokamerasysteme und Scaneinheiten, die beispielsweise einen Laserscanner einsetzen. In der Praxis ist es erforderlich, im Hinblick auf eine zu gewährleistende funktionale Sicherheit des Bodenreinigungsgerätes einerseits so viele Scaneinheiten wie nötig zu implementieren sowie andererseits so wenige Scaneinheiten wie möglich, um die technischen Anforderungen möglichst gering halten zu können.

Bekannt ist es, Sensoreinheiten unterschiedlichen Typs an einem selbstfahrenden und selbstlenkenden Bodenreinigungsgerät vorzusehen. Beispielsweise ist dies in der WO 2021/026649 A1 beschrieben, bei der an einer Vorderseite eine bodennahe Scaneinheit und Stereokamerasysteme obenseitig an der Vorderseite des Bodenreinigungsgerätes angeordnet sind.

In der EP 2 764 812 B1 ist ein Bodenreinigungsgerät beschrieben, das an der Vorderseite oben zwei Stereokamerasysteme und bodennah eine Mehrzahl von Ultraschall-Sensoreinheiten aufweist.

Die US 2020/0288936 A1 beschreibt eine robotische Bodenreinigungsmaschine. Die Maschine ist so konfiguriert, dass sie einen Reinigungsvorgang entlang eines Reinigungspfads durchführt, und umfasst einen Controller und Sensoren. Der Controller kann konfiguriert sein, die autonome Bewegung der Bodenreinigungsmaschine entlang des Reinigungspfads und die autonome Durchführung des Reinigungsvorgangs zu steuern. Die Sensoren können konfiguriert sein, einen Standort der Bodenreinigungsmaschine innerhalb ihrer Umgebung zu erfassen. Mindestens zwei Sensoren sind konfiguriert, die Bodenreinigungsmaschine in überlappenden Bereichen der Umgebung zu lokalisieren.

Aufgabe der vorliegenden Erfindung ist es, ein gattungsgemäßes Bodenreinigungsgerät und ein Bodenreinigungssystem bereitzustellen, mit dem eine höhere Betriebssicherheit erzielt werden kann.

Diese Aufgabe wird bei einem Bodenreinigungsgerät der eingangs genannten Art erfindungsgemäß dadurch gelöst, dass die Sensoreinrichtung an einer Vorderseite des Bodenreinigungsgerätes, bezogen auf dessen Vorwärtsrichtung, eine erste Abstandsmesseinheit umfasst, die als Stereokamerasystem ausgestaltet ist oder ein solches umfasst, und eine zweite Abstandsmesseinheit, die als Scaneinheit mit strukturiertem Licht ausgestaltet ist oder eine solche umfasst, wobei Sichtbereiche der ersten Abstandsmesseinheit und der zweiten Abstandsmesseinheit in Vorwärtsrichtung des Bodenreinigungsgerätes gerichtet sind und überlappen, und wobei die zweite Abstandsmesseinheit, bezogen auf eine Höhenrichtung, oberhalb der ersten Abstandsmesseinheit am Bodenreinigungsgerät angeordnet ist.

Beim erfindungsgemäßen Bodenreinigungsgerät sind eine Scaneinheit mit strukturiertem Licht und ein Stereokamerasystem vorgesehen. Die Sichtbereiche beider Abstandsmesseinheiten überlappen, wobei hierunter auch ein Überschneiden von Sichtbereichen verstanden werden kann. Die Steuereinheit kann die Informationen beider Abstandsmesseinheiten auswerten, vorzugsweise ergänzen und/oder auf Plausibilität prüfen. Vorzugsweise können Tiefeninformationen, die mittels der Scaneinheit gewonnen werden, um Informationen des Stereokamerasystems ergänzt werden, dessen Sichtweite üblicherweise geringer ist als diejenige der Scaneinheit. Aufgrund der Positionierung der Scaneinheit oberhalb des Stereokamerasystems können insbesondere in Vorwärtsrichtung vor dem Bodenreinigungsgerät angeordnete Objekte zuverlässig erfasst und beispielsweise hierauf basierend der Verfahrweg des Bodenreinigungsgerätes gesteuert werden. Ergänzend werden beispielsweise bodennähere Strukturen über das Stereokamerasystem ausgewertet und/oder das kleinräumige Lokalisations- und/oder Navigationsverhalten des Bodenreinigungsgerätes verbessert.

Positions- und Orientierungsangaben wie beispielsweise "oberhalb", "unterhalb" oder dergleichen sind vorliegend auf einen bestimmungsgemäßen Gebrauch des Bodenreinigungsgerätes bezogen. In diesem Gebrauch kann das Bodenreinigungsgerät insbesondere über das eine Kontaktebene definierende Fahrwerk auf der Bodenfläche aufstehen, wobei eine Ebene der Bodenfläche mit der Kontaktebene zusammenfällt. Die Bodenfläche kann vorliegend nichteinschränkend beispielsweise als horizontal ausgerichtet angesehen werden. "Vorwärtsrichtung" bezieht sich vorliegend insbesondere auf eine Hauptbewegungsrichtung des Bodenreinigungsgerätes beim Verfahren auf der Bodenfläche im bestimmungsgemäßen Gebrauch. "Vorderseite" kann im vorliegenden Fall insbesondere Abschnitte des Bodenreinigungsgerätes einschließen, die in einem Übergangsbereich einer Front zu einer Oberseite des Bodenreinigungsgerätes liegen. "Höhenrichtung" bezieht sich vorliegend auf eine Richtung quer und insbesondere senkrecht zur Bodenfläche. Vorgesehen sein kann, dass ein seitlicher Versatz zwischen in Höhenrichtung voneinander beabstandeten Komponenten des Bodenreinigungsgerätes besteht.

Die Scaneinheit kann beispielsweise eine Laserscaneinheit (Lidarsystem) oder eine Radarscaneinheit (Radarsystem) sein. Vorzugsweise kommt eine Laserscaneinheit mit strukturiertem sichtbarem und/oder unsichtbarem Licht zum Erfassen von Objekten zum Einsatz. Hierbei wird beispielsweise ein Lichtschnittverfahren eingesetzt, bei dem Licht in einer vordefinierten Ebene (Sichtebene) emittiert wird.

Scaneinheiten mit strukturiertem Licht, wie sie nachfolgend wiederholt erwähnt werden, können beispielsweise, wie im vorliegenden Ausführungsbeispiel, Laserscaneinheiten oder Radarscaneinheiten sein.

Die Scaneinheit ist bei einer bevorzugten Ausführungsform der Erfindung eine Mehrlagen-Scaneinheit, die ausgebildet ist, strukturiertes Licht in einer Mehrzahl von unterschiedlichen Sichtebenen zu emittierten. Strukturiertes Licht kann in mehreren voneinander unterschiedlichen Ebenen emittiert werden, um genauere Informationen über die Beschaffenheit der Umgebung zu generieren.

Beispielsweise ist vorgesehen, dass eine Sichtebene der zweiten Abstandsmesseinheit schräg nach unten auf die Bodenfläche gerichtet ist. Auf diese Weise können Unebenheiten und insbesondere diskrete Stufen oder Abgründe an der Bodenfläche zuverlässig erfasst werden. Über die zweite Abstandsmesseinheit kann dabei insbesondere ein Absturzsensor ausgebildet werden. Die Sichtebene ist vorzugsweise durch die Vorderseite des Bodenreinigungsgerätes nicht abgeschattet, so dass auch seitlich in Querrichtung quer zur Vorwärtsrichtung angeordnete Objekte erfasst werden können.

Ein Winkel zwischen der Bodenfläche und der Sichtebene kann beispielsweise ungefähr 20° bis 70° betragen, vorzugsweise ungefähr 30° bis 60°.

Alternativ oder ergänzend kann vorgesehen sein, dass eine Sichtebene der zweiten Abstandsmesseinheit parallel zur Bodenfläche ausgerichtet ist. Auf diese Weise können vorzugsweise Objekte erfasst werden, die nicht nur in Vorwärtsrichtung angeordnet sind, auch seitlich und vorzugsweise hinter dem Bodenreinigungsgerät. Vorzugsweise ist eine 360°-Erfassung möglich.

Bei Einsatz einer Sichtebene parallel zur Bodenfläche kann es von Vorteil sein, die zweite Abstandsmesseinheit möglichst hoch im Bereich der Vorderseite zu positionieren.

Als günstig kann es sich erweisen, wenn mindestens eine optische Achse der ersten Abstandsmesseinheit parallel zur Bodenfläche ausgerichtet ist. Als optische Achse kann insbesondere die optische Achse einer Kamera einer Kamera des Stereokamerasystems oder eine Achse eines vom Stereokamerasystem definierten Koordinatensystems angesehen werden.

Vorgesehen sein kann, dass eine Sichtebene der ersten Abstandsmesseinheit einen Winkel von ungefähr +/- 30° oder weniger mit der Bodenfläche einschließt, vorzugsweise ungefähr +/- 15° oder weniger beispielsweise +/- 5° oder weniger.

Vorgesehen sein kann insbesondere, dass eine Sichtebene der ersten Abstandsmesseinheit parallel zur Bodenfläche oder alternativ senkrecht zur Bodenfläche ausgerichtet ist. Die Sichtebene wird beispielsweise durch die optischen Achsen von zwei Kameras des Stereokamerasystems definiert.

Durch die Ausrichtung parallel zur Bodenfläche können Strukturen von Objekten, die quer und insbesondere senkrecht zur Bodenfläche ausgerichtet sind, zuverlässig erfasst werden. Bei einer Orientierung der Sichtebene senkrecht zur Bodenfläche können Strukturen, die im Winkel und insbesondere parallel zur Bodenfläche ausgerichtet sind, zuverlässig erfasst werden.

Als Stereokamerasystem kann insbesondere eine Kamera mit zwei oder mehr Kameras angesehen werden, bei denen Richtungen zu Objektpunkten (Länge und Winkel) mittels Triangulation bestimmt werden können. Eine jeweilige Kamera kann einen Bilddatensatz erstellen, die rechnerisch zu einem Stereobild zusammengesetzt werden können. Die Kameras können unterschiedlich beschaffen sein. Beispielsweise kann mindestens eine Kamera eine TOF- (Time-of-Flight-) Kamera sein. Die Kameras können im sichtbaren Spektrum und/oder im Infrarotspektrum sensitiv sein. Das Stereokamerasystem kann eine Projektionseinrichtung zur Emission von Licht, beispielsweise strukturiertem Licht, in die Umgebung umfassen, um das Messergebnis zu verbessern. Beispielsweise wird ein Punktmuster, ein Linienmuster oder ein Gittermuster in die Umgebung projiziert. Das Projektionslicht liegt vorzugsweise im Infrarotspektrum, wobei auch Projektionslicht im sichtbaren Spektrum denkbar ist.

Das Stereokamerasystem kann ein optisches Messsystem bilden, bei dem Informationen über Positionen der Objektpunkte unmittelbar ausgewertet werden. Alternativ kann vorgesehen sein, dass Signale des Stereokamerasystems der Steuereinheit zugeführt werden, wobei die Auswertung mit der Steuereinheit durchgeführt wird.

Günstig kann es sein, wenn die Sensoreinrichtung eine dritte Abstandsmesseinheit an der Vorderseite umfasst, die einen in der Vorwärtsrichtung ausgerichteten Sichtbereich umfasst, der mit dem Sichtbereich der ersten Abstandsmesseinheit und/oder mit dem Sichtbereich der zweiten Abstandsmesseinheit überlappt. Über die dritte Abstandsmesseinheit können weitergehende Informationen über die Umgebung gesammelt werden, wobei die bereitgestellten Informationen bereits vorhandene Informationen ergänzen und/oder zu deren Plausibilitätsprüfung herangezogen werden können.

Die dritte Abstandsmesseinheit ist vorzugsweise, bezogen auf die Höhenrichtung, unterhalb der zweiten Abstandsmesseinheit und/oder oberhalb der ersten Abstandsmesseinheit angeordnet.

Als vorteilhaft erweist es sich, wenn die dritte Abstandsmesseinheit als Stereokamerasystem ausgestaltet ist.

Vorteilhaft kann es sein, wenn mindestens eine optische Achse der dritten Abstandsmesseinheit parallel zur Bodenfläche ausgerichtet ist.

Vorgesehen sein kann, dass eine Sichtebene der dritten Abstandsmesseinheit einen Winkel von ungefähr +/- 30° oder weniger mit der Bodenfläche einschließt, vorzugsweise ungefähr +/- 15° oder weniger, beispielsweise +/- 5° oder weniger.

Vorgesehen sein kann insbesondere, dass eine Sichtebene der dritten Abstandsmesseinheit senkrecht zur Bodenfläche oder alternativ parallel zur Bodenfläche ausgerichtet ist.

Auf obige Ausführungen in Bezug auf die optische Achse und die Sichtebene im Zusammenhang mit der ersten Abstandsmesseinheit wird verwiesen.

Bei Stereokameras ist es bekannt, dass die jeweiligen Kameras zueinander eine Stereobasis definieren, entlang derer sie voneinander beabstandet sind.

Bei einer bevorzugten Ausführungsform der Erfindung umfassen die erste Abstandsmesseinheit und die dritte Abstandsmesseinheit jeweils eine Stereobasis, wobei die Stereobasen einen Winkel von 45° oder mehr zueinander einschließen, vorzugsweise von 90° oder im Wesentlichen 90°.

Eine derartige Ausführungsform ermöglicht es zum Beispiel, insbesondere repetitive Strukturen mit einer Vorzugsrichtung zuverlässiger zu erfassen. Ist zum Beispiel eine repetitive Struktur parallel zur Stereobasis einer der Abstandsmesseinheiten ausgerichtet (und wiederholt sich quer und insbesondere senkrecht dazu), kann diese Struktur mit dieser Abstandsmesseinheit weniger gut erfasst werden. Durch die im Winkel ausgerichtete weitere Abstandsmesseinheit kann die Struktur jedoch zuverlässig erfasst werden. Auf diese Weise können die Informationen beider Abstandsmesseinheiten ergänzt und etwaige Artefakte, die bei der Messung mit einer Abstandsmesseinheit auftreten können, mittels der zweiten Abstandsmesseinheit falsifiziert werden.

Als günstig erweist sich insbesondere ein Winkel von 90° zwischen den Stereobasen, wobei eine Stereobasis parallel zur Bodenfläche und die andere Stereobasis senkrecht zur Bodenfläche ausgerichtet ist. Dies gibt zum Beispiel die Möglichkeit, vertikal länglich ausgedehnte Objekte wie Posten, Rohre oder Schienen zuverlässig mit dem horizontal ausgerichteten Stereokamerasystem zu erfassen. Horizontal ausgerichtete Objekte wie zum Beispiel Schranken, Kanten, Absperrbänder oder dergleichen können zuverlässig mit der vertikal ausgerichteten Abstandsmesseinheit erfasst werden.

Vorgesehen sein kann, dass die erste Abstandsmesseinheit und die dritte Abstandsmesseinheit in Blickrichtung auf die Vorderseite eine T-Anordnung oder eine Anordnung eines umgedrehten T aufweisen.

Vorgesehen sein kann, dass eine Sichtebene der ersten Abstandsmesseinheit oder eine Sichtebene der dritten Abstandsmesseinheit mit einer Mittellängsebene des Bodenreinigungsgerätes zusammenfällt.

Vorgesehen sein kann, dass die Sichtebene mit der Mittellängsebene einen Winkel von ungefähr +/- 30° oder weniger mit der Bodenfläche einschließt, vorzugsweise ungefähr +/- 15° oder weniger, beispielsweise +/- 5° oder weniger.

Vorstehend wurde die optional vorhandene "dritte" Abstandsmesseinheit erläutert. Nachfolgend wird auf eine optional vorhandene "vierte" Abstandsmesseinheit eingegangen. Es versteht sich, dass die Bezeichnungen "dritte" und "vierte" lediglich dem vereinfachten Verständnis der vorliegenden Erläuterungen dienen. Die beiden Abstandsmesseinheiten können unabhängig voneinander vorgesehen sein, so dass beispielsweise die nachfolgend als "vierte" bezeichnete Abstandsmesseinheit die "dritte" sein kann, wenn die vorstehend erläuterte "dritte" Abstandsmesseinheit nicht vorgesehen ist.

Vorteilhaft kann es sein, wenn die Sensoreinrichtung an der Vorderseite eine vierte Abstandsmesseinheit umfasst, die, bezogen auf die Höhenrichtung, unterhalb der ersten Abstandsmesseinheit angeordnet ist und als Scaneinheit mit strukturiertem Licht ausgestaltet ist oder eine solche umfasst, wobei ein Sichtbereich der vierten Abstandsmesseinheit mit einem Sichtbereich der ersten Abstandsmesseinheit und/oder einem Sichtbereich der zweiten Abstandsmesseinheit überlappt. Über die Scaneinheit, vorzugsweise eine Laserscaneinheit, kann die Umgebung insbesondere räumlich tief erfasst werden. Informationen der weiteren Abstandsmesseinheiten (einschließlich der dritten Abstandsmesseinheit, wenn vorhanden) können ergänzt und/oder plausibilisiert werden. Die Positionierung der Scaneinheit unterhalb der weiteren Abstandsmesseinheiten kann sich als vorteilhaft im Hinblick auf eine geringe Toleranzkette erweisen, weil die Scaneinheit nahe dem Fahrwerk gelegen ist. Dies gibt die Möglichkeit, vorzugsweise verhältnismäßig valide Informationen über die Umgebung zu erfassen. Beispielsweise ist die Scaneinheit an einem Chassis des Bodenreinigungsgerätes angeordnet, an dem auch das Fahrwerk gehalten ist.

Eine Sichtebene der vierten Abstandsmesseinheit ist vorzugsweise parallel zur Bodenfläche ausgerichtet.

Vorgesehen sein kann, dass, bezogen auf die Höhenrichtung, ein Abstand der ersten Abstandsmesseinheit von der zweiten Abstandsmesseinheit ungefähr gleich einem Abstand der ersten Abstandsmesseinheit von der vierten Abstandsmesseinheit ist. Dies begünstigt eine Überlappung der Sichtbereiche der ersten Abstandsmesseinheit mit den weiteren Sichtbereichen.

Die Sensoreinrichtung umfasst vorzugsweise mindestens eine weitere Abstandsmesseinheit, die als Scaneinheit mit strukturiertem Licht ausgestaltet ist oder eine solche umfasst, insbesondere als Laserscaneinheit. Die weitere Scaneinheit ist, bezogen auf die Vorwärtsrichtung, insbesondere an einer Rückseite des Bodenreinigungsgerätes angeordnet. Über die Scaneinheit an der Rückseite können zusätzliche Informationen über die Umgebung des Bodenreinigungsgerätes gewonnen werden.

Ein Sichtbereich der Scaneinheit ist vorzugsweise parallel zur Bodenfläche ausgerichtet, wobei der Sichtbereich vorzugsweise mit dem Sichtbereich der vorstehend erwähnten vierten Abstandsmesseinheit eine gemeinsame Sichtebene definiert.

Die Scaneinheiten an der Vorderseite und an der Rückseite sind vorteilhafterweise einander diametral gegenüberliegend am Bodenreinigungsgerät angeordnet. Hierbei kann es sich zum Beispiel als vorteilhaft erweisen, wenn eine jeweilige Scaneinheit in einem Eckbereich positioniert ist, beispielsweise die vordere Scaneinheit vorne links und die hintere Scaneinheit hinten rechts oder die vordere Scaneinheit vorne rechts und die hintere Scaneinheit hinten links.

Vorzugsweise ermöglichen die Sichtbereiche der Scaneinheiten in Kombination miteinander eine 360°- oder im Wesentlichen 360°- Rundumüberwachung des Bodenreinigungsgerätes. Auf diese Weise kann eine besonders hohe Betriebssicherheit des Bodenreinigungsgerätes erzielt werden.

Günstig kann es sein, wenn die Sensoreinrichtung mindestens eine weitere Abstandsmesseinheit umfasst, die an einer, bezogen auf die Vorwärtsrichtung, linken Seite oder rechten Seite des Bodenreinigungsgerätes angeordnet ist und einen Sichtbereich umfasst, der zur linken Seite oder zur rechten Seite des Bodenreinigungsgerätes und auf die Bodenfläche gerichtet ist. Hierbei versteht es sich, dass eine an der linken Seite angeordnete Abstandsmesseinheit einen Sichtbereich zur linken Seite und eine an der rechten Seite angeordnete Abstandsmesseinheit einen Sichtbereich zur rechten Seite aufweist. Durch die mindestens eine weitere Abstandsmesseinheit kann die Betriebssicherheit erhöht werden. Seitliche Bereiche des Bodenreinigungsgerätes können zusätzlich überwacht werden, was insbesondere bei Fahrtrichtungsänderungen nach links bzw. nach rechts vorteilhaft ist.

Günstigerweise sind zwei weitere Abstandsmesseinheiten vorgesehen, einmal an der linken Seite und einmal an der rechten Seite. Die Abstandsmesseinheiten sind vorzugsweise symmetrisch relativ zueinander bezüglich einer Mittellängsebene des Bodenreinigungsgerätes ausgebildet.

Die mindestens eine weitere Abstandsmesseinheit ist bei einer bevorzugten Ausführungsform der Erfindung als Stereokamerasystem ausgebildet. Dies gibt zum Beispiel die Möglichkeit, insbesondere den Nahbereich des Bodenreinigungsgerätes zu überwachen, im Hinblick auf eine hohe funktionale Sicherheit bei Fahrtrichtungsänderungen.

Fernbereiche des Bodenreinigungsgerätes können vorzugsweise mit Scaneinheiten obenseitig an der Vorderseite, unten an der Vorderseite und unten an der Rückseite überwacht werden.

Ein Sichtbereich der mindestens einen weiteren Abstandsmesseinheit überlappt beispielsweise mit einem Sichtbereich der ersten Abstandsmesseinheit und/oder der zweiten Abstandsmesseinheit. Weiter kann ein Überlapp mit einem Sichtbereich der dritten und/oder vierten und/oder der weiteren Abstandsmesseinheit an der Rückseite vorgesehen sein.

Der Sichtbereich der mindestens einen weiteren Abstandsmesseinheit kann beispielsweise eine Fahrspur des Bodenreinigungsgerätes auf der Bodenfläche schneiden. Unter der "Fahrspur" kann ein Bereich der Bodenfläche vorgesehen sein, der sich durch Projektion des Gehäuses des Bodenreinigungsgerätes auf die Bodenfläche ohne Berücksichtigung von Reinigungsaggregaten wie zum Beispiel einem Reinigungswerkzeug ergibt.

Die vorstehend erläuterte bevorzugte Diversität unterschiedlicher Sensoreinheiten und insbesondere Abstandsmesseinheiten und die unterschiedlichen der Sichtbereiche erlaubt eine Ergänzung und/oder Plausibilisierung von Informationen wie Messdaten und dient dazu, die Betriebssicherheit des Bodenreinigungsgerätes zu steigern. Artefakte wie beispielsweise Phantompunkte, Phantomkanten oder Phantomhindernisse können erheblich reduziert werden. Das Bodenreinigungsgerät weist eine geringe Störanfälligkeit auf, wodurch die Reinigungsleistung gesteigert werden kann.

Zu dem vorstehend genannten Zweck ist alternativ oder ergänzend günstigerweise vorgesehen, dass die Sensoreinrichtung mindestens eine Ultraschall-Messeinheit umfasst, zur Emission von Ultraschall in die Umgebung und Empfang von von der Umgebung reflektiertem Ultraschall. Ultraschall erlaubt es beispielsweise, remissionsschwache Objekte wie zum Beispiel Glas zuverlässig zu erfassen.

Vorgesehen sein kann insbesondere, dass eine Ultraschall-Messeinheit mit einem in der Vorwärtsrichtung emittierenden Ultraschallsensor an der Vorderseite angeordnet ist. Beispielsweise wird Ultraschall im Wesentlichen parallel zur Bodenfläche abgestrahlt. Die Ultraschall-Messeinheit ist vorzugsweise möglichst nah an der ersten Abstandsmesseinheit angeordnet, um die von dieser gewonnenen Informationen zu ergänzen und/oder zu plausibilisieren.

Günstig kann es sein, wenn mindestens eine Ultraschall-Messeinheit vorgesehen ist, die zwei nebeneinander angeordnete Ultraschallsensoren umfasst. Die Ultraschallsensoren sind vorzugsweise in einer gemeinsamen Aufnahme an einem Gehäuse des Bodenreinigungsgerätes angeordnet. Durch die auf diese Weise erzielte paarweise Anordnung von Ultraschallsensoren, so zeigt sich in der Praxis, kann ein besseres Messergebnis erzielt werden. Beispielsweise wird ein Übersprechen zwischen den Ultraschallsensoren der Messeinheit überwacht und ausgewertet. Erfolgreiches Übersprechen bietet eine Kontrolle, dass beide Ultraschallsensoren funktionieren. Ein Ausfall eines Ultraschallsensors kann bei fehlendem Übersprechen erkannt werden. Durch die paarweise Anordnung der Ultraschallsensoren kann insbesondere ein Erfassungsbereich nah am Bodenreinigungsgerät überwacht werden.

Die Ultraschall-Messeinheit kann mehr als zwei nebeneinander angeordnete Ultraschallsensoren umfassen, beispielsweise drei Ultraschallsensoren, um einen breiteren Erfassungsbereich zu erzielen.

Die Ultraschall-Messeinheiten des Bodenreinigungsgerätes sind vorzugsweise getrennt voneinander ansteuerbar. Hierbei können die Messeinheiten synchron oder gesondert betrieben werden, beispielsweise getaktet.

Die Messeinheiten können vorzugsweise abhängig von Bewegungsparametern des Bodenreinigungsgerätes und/oder der erfassten Umgebung angesteuert werden. Beispielsweise erfolgt eine Ansteuerung abhängig von einer Verfahrgeschwindigkeit und/oder einer Verfahrrichtung. Eine gezielte Ansteuerung der Ultraschall-Messeinheiten kann zum Beispiel erfolgen, um etwaige Informationen der weiteren Abstandsmesseinheiten zu überprüfen und/oder zu ergänzen.

Als vorteilhaft kann es sich zum Beispiel erweisen, wenn Ultraschall-Messeinheiten an der Vorderseite und/oder an einer linken Seite und/oder rechten Seite des Bodenreinigungsgerätes angeordnet sind. Beispielsweise sind Ultraschall-Messeinheiten im Bereich von vorderen Seitenwandabschnitten links und rechts des Bodenreinigungsgerätes angeordnet, zum Beispiel nahe oder an Übergangsbereichen zur Vorderseite. Vorteilhaft kann mindestens eine Ultraschall-Messeinheit an der Rückseite sein und/oder im Bereich von hinteren Seitenwandabschnitten links und rechts des Bodenreinigungsgerätes, zum Beispiel nahe oder an Übergangsbereichen zur Rückseite.

Insgesamt ist es von Vorteil, wenn über die Ultraschall-Messeinheiten eine Überwachung der Umgebung bei einer Vorwärtsfahrt und bei Fahrtrichtungsänderungen nach links und rechts überwacht werden können.

Als günstig kann es sich erweisen, wenn Emissionsrichtungen von Ultraschallsensoren der mindestens einen Ultraschall-Messeinheit schräg nach oben weg von der Bodenfläche ausgerichtet sind. In der Praxis zeigt sich, dass auf diese Weise beispielsweise Störeinflüsse verringert werden können. Ein Winkel zwischen der Emissionsrichtung der Ultraschallsensoren und der Bodenfläche kann beispielsweise ungefähr 10° bis 40° betragen.

Zur Formung des Schallfeldes und/oder zur Unterdrückung von Störeinflüssen können Ultraschallsensoren beispielsweise ein Strahlformungselement umfassen, das zum Beispiel konusförmig ausgestaltet ist.

Die Sensoreinrichtung kann bei einer bevorzugten Ausführungsform mindestens eine Time-of-Flight (TOF-)Abstandsmesseinheit umfassen. Die TOF-Abstandsmesseinheit ist vorzugsweise an der Vorderseite angeordnet und kann einen in Vorwärtsrichtung ausgerichteten Sichtbereich aufweisen. Die TOF-Abstandsmesseinheit dient zum Beispiel zur Erfassung von frontalen Hindernissen, remissionsschwachen Oberflächen und/oder Abgründen an der Bodenfläche.

Günstig ist es, wenn das Bodenreinigungsgerät mindestens ein Anschlusselement zum Zuführen einer für die Durchführung einer Reinigungsaufgabe erforderlichen Verbrauchskomponente für das Bodenreinigungsgerät umfasst, wobei das mindestens eine Anschlusselement an der Vorderseite angeordnet ist. Über das Anschlusselement kann zum Beispiel eine Reinigungsflüssigkeit und/oder elektrische Energie für eine Batterie des Bodenreinigungsgerätes zugeführt werden.

Das mindestens eine Anschlusselement ist bei einer bevorzugten Ausführungsform der Erfindung in der Höhenrichtung zwischen der ersten Abstandsmesseinheit und der zweiten Abstandsmesseinheit angeordnet.

Vorgesehen sein kann, dass zumindest die erste Abstandsmesseinheit in einem an der Vorderseite angeordneten Sensorbereich angeordnet ist und dass das mindestens eine Anschlusselement in einem Anschlussbereich an der Vorderseite angeordnet ist, wobei der Sensorbereich relativ zum Anschlussbereich nach hinten versetzt an der Vorderseite angeordnet ist. Dies erleichtert das Andocken des Bodenreinigungsgerätes über das mindestens eine Anschlusselement, wobei die Abstandsmesseinheit durch den Versatz nach hinten geschützt ist.

Wie eingangs erwähnt, betrifft die vorliegende Erfindung auch ein Bodenreinigungssystem.

Ein erfindungsgemäßes Bodenreinigungssystem umfasst ein Bodenreinigungsgerät der vorstehend beschriebenen Art mit mindestens einem Anschlusselement und eine Andockstation für das Bodenreinigungsgerät, welche mindestens ein Anschlusselement zum Zuführen einer Verbrauchskomponente für das Bodenreinigungsgerät umfasst, wobei in einer Andockstellung des Bodenreinigungsgerätes an der Andockstation das mindestens eine Anschlusselement des Bodenreinigungsgerätes und das mindestens eine Anschlusselement der Andockstation miteinander koppeln.

Die Vorteile, die bereits im Zusammenhang mit der Erläuterung des Bodenreinigungsgerätes erzielt wurden, können bei dem erfindungsgemäßen Bodenreinigungssystem ebenfalls erzielt werden. Vorteilhafte Ausführungsformen des erfindungsgemäßen Bodenreinigungssystems ergeben sich durch vorteilhafte Ausführungsformen des erfindungsgemäßen Bodenreinigungsgerätes. Auf die voranstehenden Ausführungen wird verwiesen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung des erfindungsgemäßen Bodenreinigungsgerätes in bevorzugter Ausführungsform;
- Figur 2:: eine Vorderansicht des Bodenreinigungsgerätes aus Figur 1;
- Figur 3:: eine vergrößerte Darstellung von Detail A in Figur 2;
- Figur 4:: eine perspektivische Darstellung des Bodenreinigungsgerätes aus Figur 1 mit zwei Sichtbereichen von Abstandsmesseinheiten;
- Figur 5:: eine perspektivische Darstellung des Bodenreinigungsgerätes aus Figur 1 mit zwei Sichtbereichen von weiteren Abstandsmesseinheiten;
- Figur 6:: eine Draufsicht auf das Bodenreinigungsgerät aus Figur 1, eine Fahrspur und vier Sichtbereiche von Abstandsmesseinheiten;
- Figur 7:: eine Darstellung in Blickrichtung des Pfeiles 7 in Figur 6, wobei das Bodenreinigungsgerät von links gezeigt ist und zusätzlich Sichtebenen von Scaneinheiten dargestellt sind;
- Figur 8:: eine Draufsicht auf das Bodenreinigungsgerät, in der Sichtbereiche der Scaneinheiten gezeigt sind;
- Figur 9:: eine Draufsicht auf das Bodenreinigungsgerät, in der Sichtbereiche von Ultraschall-Messeinheiten dargestellt sind; und
- Figur 10:: eine schematische Darstellung eines erfindungsgemäßen Bodenreinigungssystems, umfassend das Bodenreinigungsgerät und eine Andockstation.

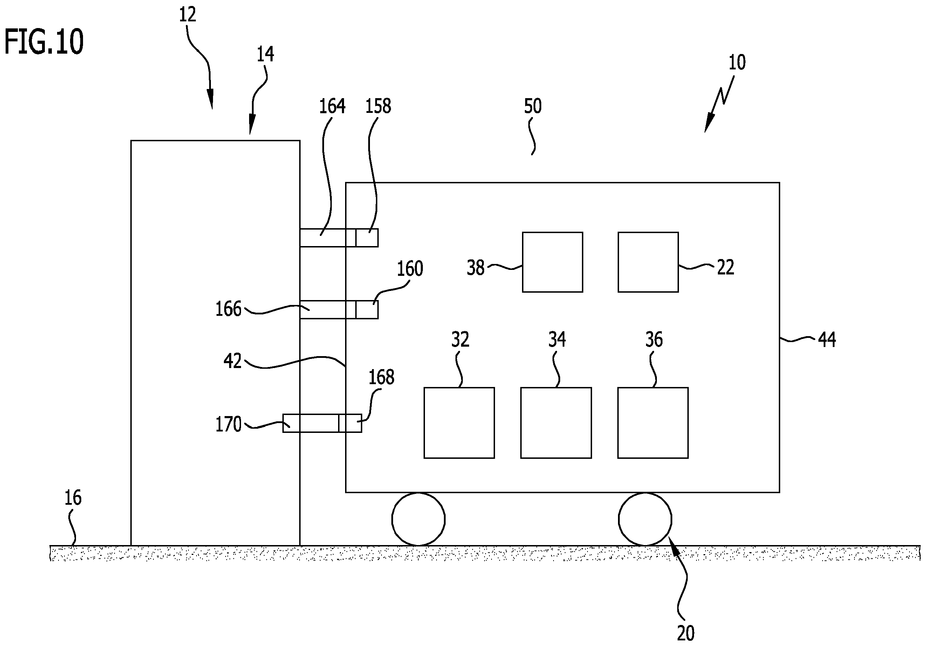

In der Zeichnung ist eine insgesamt mit dem Bezugszeichen 10 belegte vorteilhafte Ausführungsform des erfindungsgemäßen Bodenreinigungsgerätes dargestellt. Das Bodenreinigungsgerät 10 ist Bestandteil einer bevorzugten Ausführungsform des erfindungsgemäßen Bodenreinigungssystems 12, das in Figur 10 schematisch gezeigt ist und zusätzlich zum Bodenreinigungsgerät 10 eine Andockstation 14 umfasst.

Das Bodenreinigungsgerät 10 ist selbstfahrend und selbstlenkend ausgestaltet und ermöglicht eine autonome Reinigung einer Bodenfläche 16. Insbesondere bildet das Bodenreinigungsgerät 10 einen Reinigungsroboter.

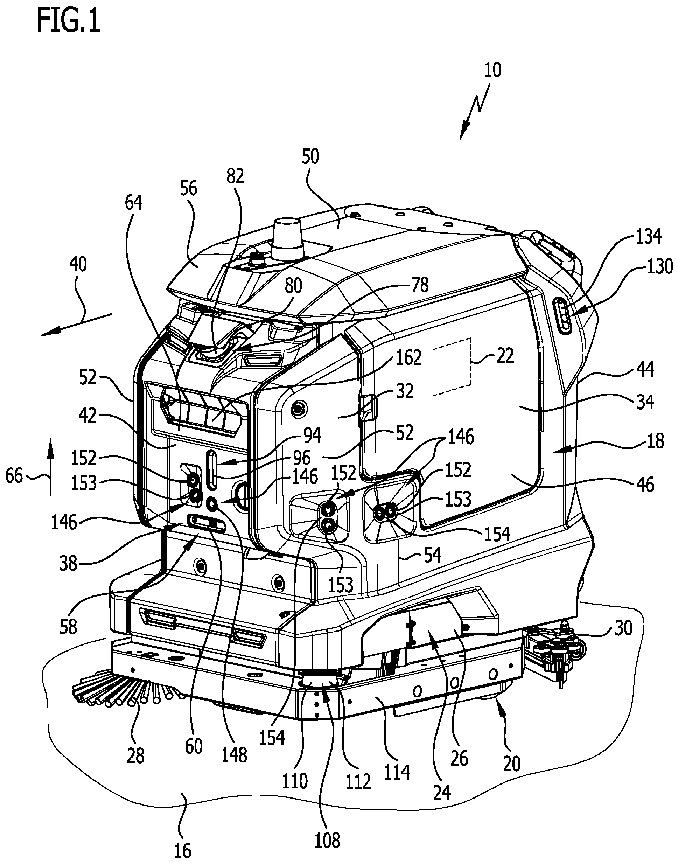

Das Bodenreinigungsgerät 10 umfasst ein Gehäuse 18 mit einem an einer Unterseite angeordneten Fahrwerk 20 zum Verfahren auf der Bodenfläche 16. Zur Steuerung des Betriebs umfasst das Bodenreinigungsgerät 10 eine Steuereinrichtung 22 (Figuren 1 und 10).

Um die Bodenfläche 16 zu reinigen, umfasst das Bodenreinigungsgerät 10 eine Reinigungseinrichtung 24. Die Reinigungseinrichtung 24 umfasst ein Reinigungswerkzeug in Gestalt eines Bodenreinigungskopfes 26 mit in der Zeichnung nicht dargestellten Reinigungswalzen, einen Seitenbesen 28 und eine Saugleiste 30.

Ferner ist ein Vorratsbehälter 32 für eine Reinigungsflüssigkeit, insbesondere Wasser, vorgesehen, um die Bodenfläche 16 zu benetzen. Schmutz wird von der Bodenfläche 16 mit den Reinigungswerkzeugen abgelöst. Das Gemisch aus Reinigungsflüssigkeit und Schmutz wird mittels der Saugleiste 30 aufgenommen und in einen Schmutzflüssigkeitsbehälter 34 überführt.

Zur Bereitstellung elektrischer Energie umfasst das Bodenreinigungsgerät 10 mindestens eine wiederaufladbare, insbesondere elektrische Batterie 36.

Das Bodenreinigungsgerät 10 ist dementsprechend eine Scheuersaugmaschine. Die vorliegende Erfindung ist jedoch nicht auf diese Art Bodenreinigungsgerät beschränkt.

Zur Lokalisation und/oder Navigation innerhalb der Umgebung umfasst das Bodenreinigungsgerät 10 eine mit der Steuereinrichtung 22 in Wirkverbindung stehende Sensoreinrichtung 38. Die Sensoreinrichtung 38 umfasst eine Mehrzahl von Sensoreinheiten, die nachfolgend erläutert werden.

Abhängig von mindestens einem Signal der Sensoreinrichtung 38 kann die Steuereinrichtung 22 das Bodenreinigungsgerät 10 steuern, beispielsweise um Reinigungsaufgaben durchzuführen. Dabei können beispielsweise Hindernisse erkannt, das Bodenreinigungsgerät 10 erforderlichenfalls gestoppt oder Hindernisse umfahren werden.

Die Mehrzahl von Sensoreinheiten dient dazu, eine möglichst lückenlose Überwachung der Umgebung zu gewährleisten. Besondere Bedeutung kommt hierbei einer Überwachung der Umgebung in einer Vorwärtsrichtung 40 zu, in der sich das Bodenreinigungsgerät 10 im bestimmungsgemäßen Gebrauch auf der Bodenfläche 16 bewegen kann. Die Vorwärtsrichtung 40 kann zum Beispiel längs einer Hauptbewegungsrichtung bei geradliniger Geradeausfahrt ausgerichtet sein. Ebenso ist eine Überwachung bei Fahrtrichtungsänderungen nach links und nach rechts bei einer Vorwärtsfahrt von Bedeutung.

Auf die eingangs gemachten Erläuterungen in Bezug auf Positions- und Orientierungsangaben wird verwiesen. Es wird nachfolgend davon ausgegangen, dass das Bodenreinigungsgerät 10 über das Fahrwerk 20 bestimmungsgemäß auf der Bodenfläche 16 positioniert ist, die insbesondere horizontal ausgerichtet sein kann.

Das Bodenreinigungsgerät 10 weist, bezogen auf die Vorwärtsrichtung 40, eine Vorderseite 42, eine Rückseite 44, eine linke Seite 46, eine rechte Seite 48 und eine Oberseite 50 auf. Aneinandergrenzende Seiten 42 bis 50 können miteinander Übergangsbereiche definieren. Beispielsweise sind Übergangsbereiche 52 jeweils zwischen der linken Seite 46 und der Vorderseite 42 sowie der rechten Seite 48 und der Vorderseite 42 gebildet. Nach hinten schließen sich an die Übergangsbereiche 52 links und rechts Seitenwandabschnitte 54 an.

Ein Übergangsbereich 56 ist zwischen der Vorderseite 42 und der Oberseite 50 gebildet.

Übergangsbereiche können von demselben Gehäuseteil oder unterschiedlichen Gehäuseteilen des Gehäuses 18 miteinander gebildet sein.

Die Sensoreinrichtung 38 umfasst als Sensoreinheit eine erste Abstandsmesseinheit 58, ausgestaltet als Stereokamerasystem 60 (nachfolgend Stereokamera 60).

Die Stereokamera 60 ist an der Vorderseite 42 angeordnet. Hierbei ist die Stereokamera 60 in einem Sensorbereich 62 angeordnet, der bezüglich eines Anschlussbereiches 64, auf den nachfolgend noch eingegangen wird, an der Vorderseite 42 nach hinten versetzt ist.

Die Stereokamera 60 ist, bezogen auf eine Höhenrichtung 66, in einem mittleren Bereich des Bodenreinigungsgerätes 10 positioniert, vorliegend in einem Bereich von ungefähr 40% bis 60% der Höhe.

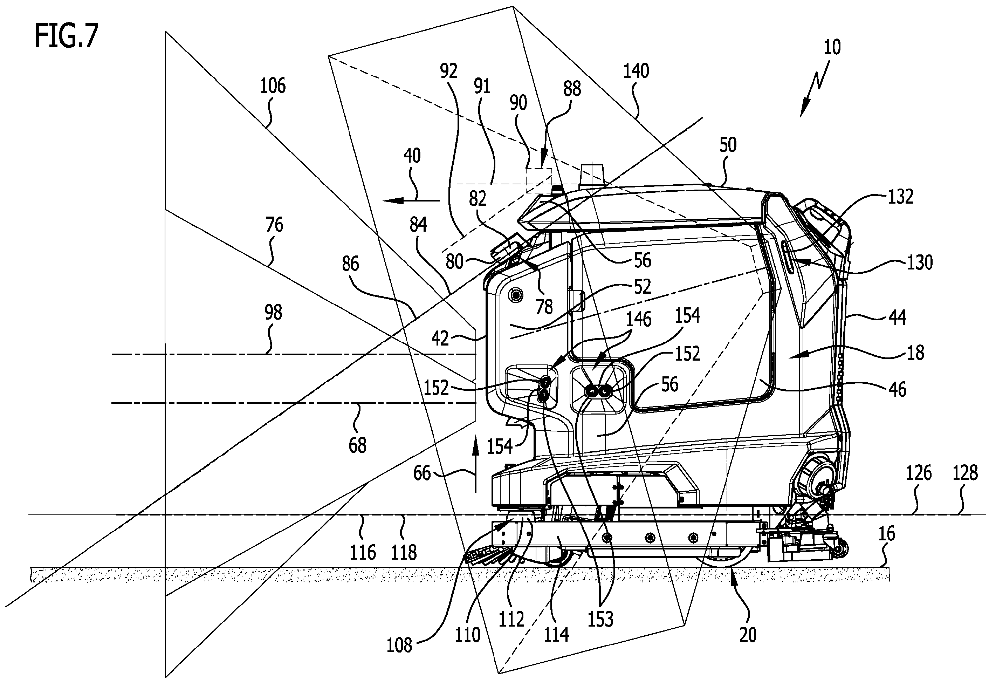

Die Stereokamera 60 ist so ausgerichtet, dass eine jeweilige optische Achse 68 der Kameras 70 der Stereokamera 60 parallel zur Bodenfläche 16 ausgerichtet ist (Figur 7). Eine Sichtebene 72 der Stereokamera 60 ist im vorliegenden Beispiel ebenfalls parallel zur Bodenfläche 16 ausgerichtet, wobei die Sichtebene 72 durch den Verlauf der optischen Achsen 68 beider Kameras 70 definiert ist.

Die Stereokamera 60 umfasst ferner eine Projektionseinrichtung 74 zur Projektion strukturierten Lichts (beispielsweise ein Punktmuster, ein Linienmuster oder ein Gittermuster) zur Verbesserung des Messergebnisses. Die Stereokamera 60 weist ferner eine RGB-Kamera 75 zum Aufnehmen eines 2D-Bildes auf.

Die Stereokamera 60 kann im sichtbaren Bereich und/oder im Infrarotbereich sensitiv sein.

Die Kameras 70 der Stereokamera 60 definieren eine Stereobasis, die vorliegend in der Sichtebene 72 verläuft. Die Stereobasis ist vorliegend parallel zur Bodenfläche 16 ausgerichtet.

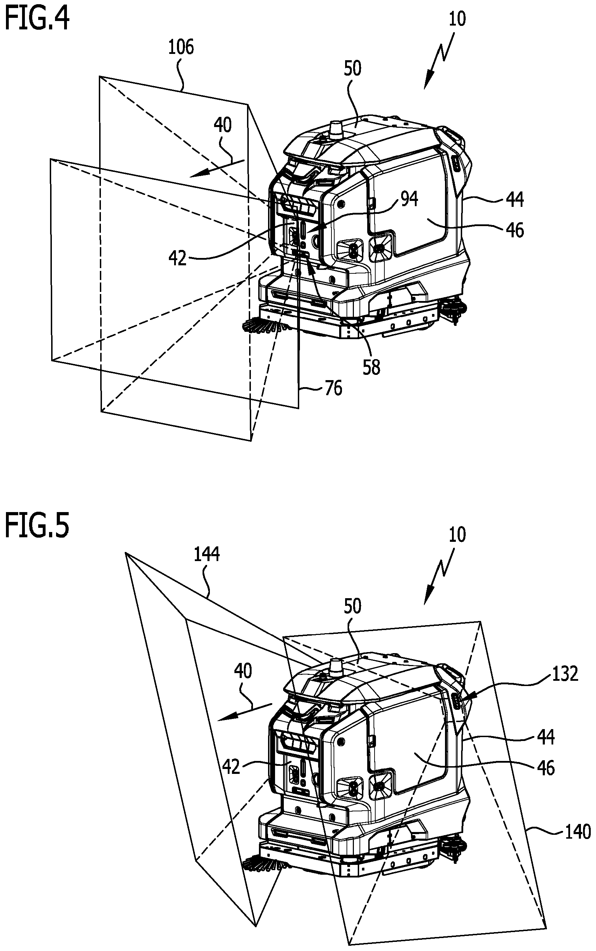

Die Figuren 4, 6 und 7 zeigen den Sichtbereich 76 der Stereokamera 60, der in Vorwärtsrichtung 40 verläuft und sich nach vorne erweitert.

An der Vorderseite 42 umfasst das Bodenreinigungsgerät 10 eine zweite Abstandsmesseinheit 78, die ausgestaltet ist als Scaneinheit 80 mit strukturiertem Licht, insbesondere als Lidarsystem 82. Das Lidarsystem 82 ist bezogen auf die Höhenrichtung 66 oberhalb der Stereokamera 60 angeordnet, im vorliegenden Ausführungsbeispiel ungefähr im Bereich von 70% bis 90% der Höhe des Bodenreinigungsgerätes 10.

Das Lidarsystem 82 emittiert strukturiertes Licht in einer Sichtebene 84 in Vorwärtsrichtung 40. Die Sichtebene 84 bildet einen Sichtbereich 86, der mit dem Sichtbereich 76 überlappt.

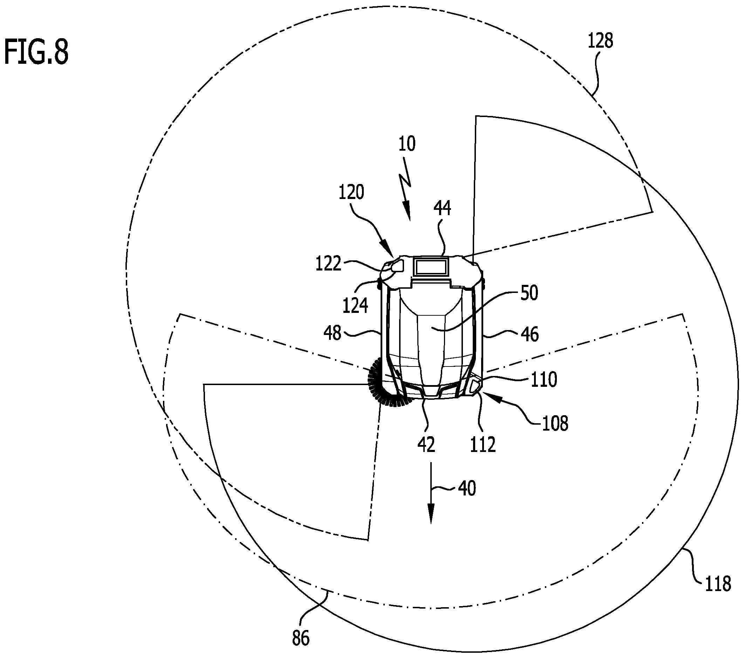

Im vorliegenden Fall erstreckt sich der Sichtbereich 86 auch nach links und nach rechts über das Bodenreinigungsgerät 10 hinaus (Figur 8).

Die Sichtebene 84 ist relativ zur Bodenfläche 16 unter einem Winkel von im vorliegenden Beispiel ungefähr 30° bis 40° geneigt (Figur 7).

Über das Lidarsystem 82 können Objekte in der Umgebung aufgrund der Möglichkeit der langreichweitigen Erfassung zuverlässig erkannt werden. Der Nahbereich kann mittels der Stereokamera 60 genauer überprüft werden. Durch die Neigung des Sichtbereiches 86 relativ zur Bodenfläche 16 kann das Lidarsystem 82 vorliegend insbesondere zur Detektion von Abgründen eingesetzt werden und Absturzsensor dienen.

Alternativ oder ergänzend zur Scaneinheit 80 kann das erfindungsgemäße Bodenreinigungsgerät 10 eine in Figur 7 schematisch gestrichelt dargestellte Abstandsmesseinheit umfassen, die die zweite Abstandsmesseinheit im Sinne der vorliegenden Offenbarung sein kann und mit dem Bezugszeichen 88 belegt ist. Die Abstandsmesseinheit 88 ist insbesondere eine als Lidarsystem ausgestaltete Scaneinheit 90 und speziell eine Mehrlagen-Scaneinheit, die ausgebildet ist, strukturiertes Licht in einer Mehrzahl von unterschiedlichen Sichtebenen 91, 92 zu emittieren.

Eine Sichtebene 91 ist beispielsweise parallel zur Bodenfläche 16 ausgerichtet und ermöglicht vorzugsweise eine Überwachung in einem Umfangswinkel von 360° oder im Wesentlichen 360° um das Bodenreinigungsgerät 10 herum. Die Sichtebene 92 kann beispielsweise wie die Sichtebene 84 relativ zur Bodenfläche 16 geneigt ausgerichtet sein.

Es versteht sich, dass die Scaneinheit 90 mehr als nur zwei Sichtebenen aufweisen kann, in denen strukturiertes Licht emittiert wird.

Die Sensoreinrichtung 38 umfasst vorliegend als weitere Sensoreinheit eine dritte Abstandsmesseinheit 94, ausgestaltet als Stereokamerasystem 96 (nachfolgend Stereokamera 96). Die Stereokamera 96 ist vorzugsweise identisch oder funktionsgleich zur Stereokamera 60 ausgestaltet. Im vorliegenden Fall umfasst die Stereokamera 96 eine optische Achse 98, Kameras 100 und definiert eine Sichtebene 102. Die Stereokamera 96 umfasst eine Projektionseinrichtung 104 und eine RGB-Kamera 105. Sie weist einen in Vorwärtsrichtung 40 gerichteten Sichtbereich 106 auf, der mit den Sichtbereichen 76 und 86 überlappt und sich nach vorne erweitert.

Die optische Achse 98 ist parallel zur Bodenfläche 16 ausgerichtet. Im vorliegenden Beispiel ist die Sichtebene 102 senkrecht zur Bodenfläche 16 ausgerichtet. Die Sichtebene 102 liegt in einer Mittellängsebene 103 des Bodenreinigungsgerätes 10.

Die Stereokamera 96 umfasst eine Sensorbasis, die in der Sichtebene 102 verläuft.

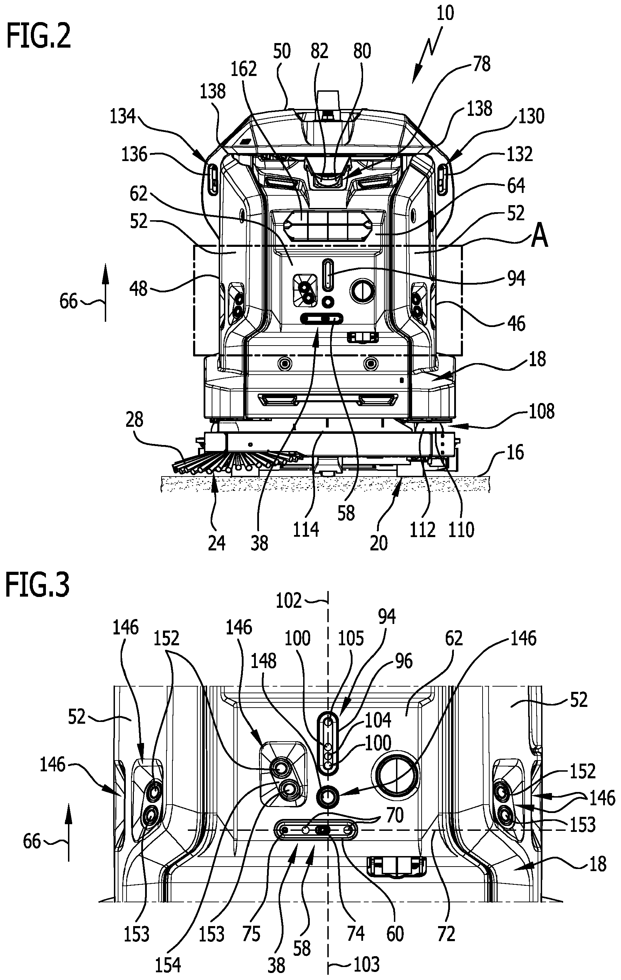

Die Sensorbasen der Stereokameras 60 und 96 sind in einem Winkel zueinander ausgerichtet, wobei der Winkel im vorliegenden Fall 90° beträgt (Figuren 2 und 3).

Eine derartige Anordnung der Stereokameras 60 und 96 ist vorteilhaft, um Objekte mit horizontalen und vertikalen Strukturen besser erkennen zu können. Objekte mit vertikalen Strukturen können über die Stereokamera 60 besser erkannt werden und Objekte mit horizontalen Strukturen über die Stereokamera 96. Basierend auf den Signalen beider Stereokameras 60, 96 ist es der Steuereinrichtung 38 möglich, etwaige Phantompunkte, Phantomkanten und/oder Phantomhindernisse auszuschließen.

Vorliegend ist die Stereokamera 96 in der Höhenrichtung 66 oberhalb der Stereokamera 60 und unterhalb des Lidarsystems 82 angeordnet. In Draufsicht auf die Vorderseite 42 sind die Stereokameras 60, 96 in Gestalt eines auf dem Kopf stehenden T zueinander angeordnet.

Zur weiteren Überwachung der Umgebung umfasst die Sensoreinrichtung 38 eine Sensoreinheit in Gestalt einer vierten Abstandsmesseinheit 108, ausgestaltet als Scaneinheit 110 mit strukturiertem Licht, insbesondere als Lidarsystem 112. Das Lidarsystem 112 ist an der Vorderseite 42 unterhalb der Stereokamera 96 angeordnet, bezogen auf die Höhenrichtung 66. Wie insbesondere aus Figur 2 hervorgeht, ist das Lidarsystem 112 vorne links am Bodenreinigungsgerät 10 positioniert. Dabei ist das Lidarsystem 112 bodenflächennah an einem Chassis 114 angeordnet, an dem auch das Fahrwerk 20 gehalten ist, im Hinblick auf eine geringe Toleranzkette.

Das Lidarsystem 112 emittiert strukturiertes Licht in einer Sichtebene 116, die vorliegend parallel zur Bodenfläche 16 ausgerichtet ist. Das Lidarsystem 112 weist insgesamt einen Sichtbereich 118 auf, der mit den Sichtbereichen 76, 86 und 106 überlappt.

Der Sichtbereich 118 erstreckt sich über einen Umfangswinkel von im Wesentlichen 270° und erlaubt es, Objekte links hinter dem, links neben dem und rechts neben dem Bodenreinigungsgerät 10 zu erfassen (Figur 8).

Mit dem Lidarsystem 112 können insbesondere fern vom Bodenreinigungsgerät 10 angeordnete Objekte erfasst werden. Der Nahbereich wird zusätzlich mittels der Stereokameras 60 und 96 überwacht.

Bezogen auf die Höhenrichtung 66 ist weist die Stereokamera 60 ungefähr dieselben Abstände von den Lidarsystemen 112 und 82 auf, um den zwischen den Sichtebenen 84 und 116 vorhandenen Totraum nahe der Vorderseite 42 bestmöglich überwachen zu können (Figur 7).

Die Sensoreinrichtung 38 umfasst als weitere Sensoreinheit eine weitere Abstandsmesseinheit 120, ausgestaltet als Scaneinheit 122 mit strukturiertem Licht und insbesondere als Lidarsystem 124. Das Lidarsystem 124 emittiert Licht in einer Sichtebene 126, die mit der Sichtebene 116 vorzugsweise zusammenfällt und parallel zur Bodenfläche 16 ausgerichtet ist.

Ein Sichtbereich 128 des Lidarsystems 124 erstreckt sich über einen Bereich von im Wesentlichen 270° und erlaubt es, Objekte rechts hinter dem, rechts neben dem bis links hinter dem Bodenreinigungsgerät 10 zu erfassen (Figur 8).

Das Lidarsystem 124 ist diametral zum Lidarsystem 112 am Bodenreinigungsgerät 10 angeordnet und vorliegend insbesondere hinten links und vorzugsweise am Chassis 114 positioniert. Die Figuren 2 und 8 zeigen jeweils gestrichelt die diesbezügliche Position.

Über die beiden Abstandsmesseinheiten 108 und 120 kann eine 360°-Rundumüberwachung des Bodenreinigungsgerätes 10 vorgenommen werden.

Die Sensoreinrichtung 38 umfasst als weitere Sensoreinheiten Abstandsmesseinheiten 130 und 134, jeweils ausgestaltet als Stereokamerasystem 132 bzw. 136 (nachfolgend Stereokameras 132, 136).

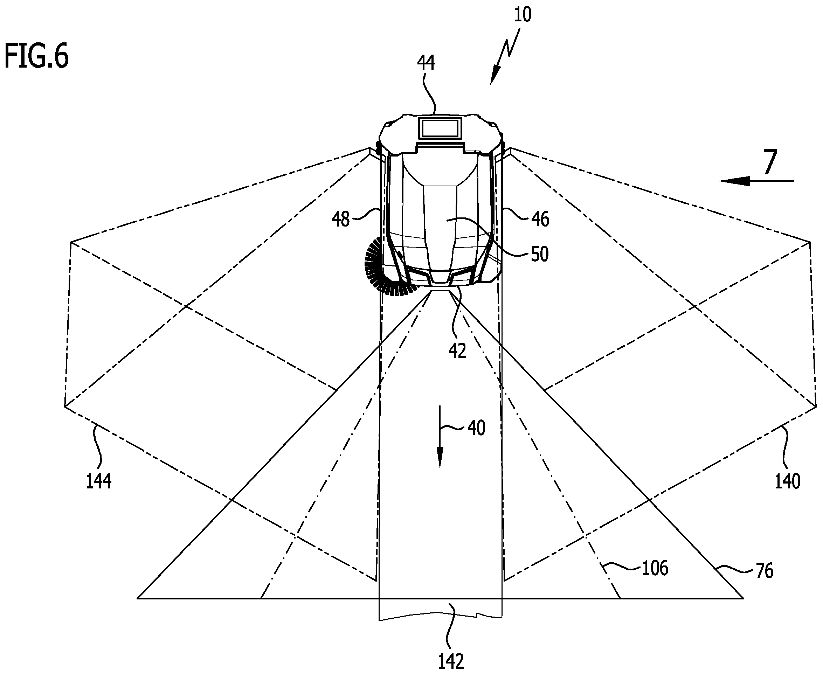

Die Stereokamera 132 ist hinten links und oben am Bodenreinigungsgerät 10 angeordnet, nahe einem Übergangsbereich 138 zwischen der linken Seite 46 und der Rückseite 44. Ein Sichtbereich 140 ist zur linken Seite und auf die Bodenfläche 16 gerichtet und erweitert sich nach vorne. Der Sichtbereich 140 überlappt mit den Sichtbereichen 76, 86, 106 und 118 und schneidet im vorliegenden Fall eine Fahrspur 142 des Bodenreinigungsgerätes 10 (Figur 6).

Die Stereokamera 132 dient zur Überwachung der Umgebung insbesondere bei Fahrtrichtungsänderungen nach links.

In korrespondierender Weise ist die Stereokamera 136 hinten rechts oben nahe einem Übergangsbereich 138 zwischen der rechten Seite 48 und der Rückseite 44 angeordnet. Der Sichtbereich 144 ist zur rechten Seite und auf die Bodenfläche 16 gerichtet und erweitert sich nach vorne. Der Sichtbereich 144 überlappt mit den Sichtbereichen 76, 86, 106, 118 und 128 und schneidet im vorliegenden Fall die Fahrspur 142.

Die Stereokamera 136 dient insbesondere zur Überwachung der Umgebung bei Fahrtrichtungsänderungen nach rechts.

Die Stereokameras 132 und 136 sind symmetrisch zueinander bezüglich der Mittellängsebene 103 ausgebildet.

Zur weiteren Überwachung der Umgebung umfasst die Sensoreinrichtung 38 Sensoreinheiten in Gestalt von Ultraschall-Messeinheiten 146. Im vorliegenden Beispiel ist eine Mehrzahl von Ultraschall-Messeinheiten 146 vorgesehen, die insbesondere an der Vorderseite 42, den Übergangsbereichen 52 und den Seitenwandabschnitten 54 angeordnet sind.

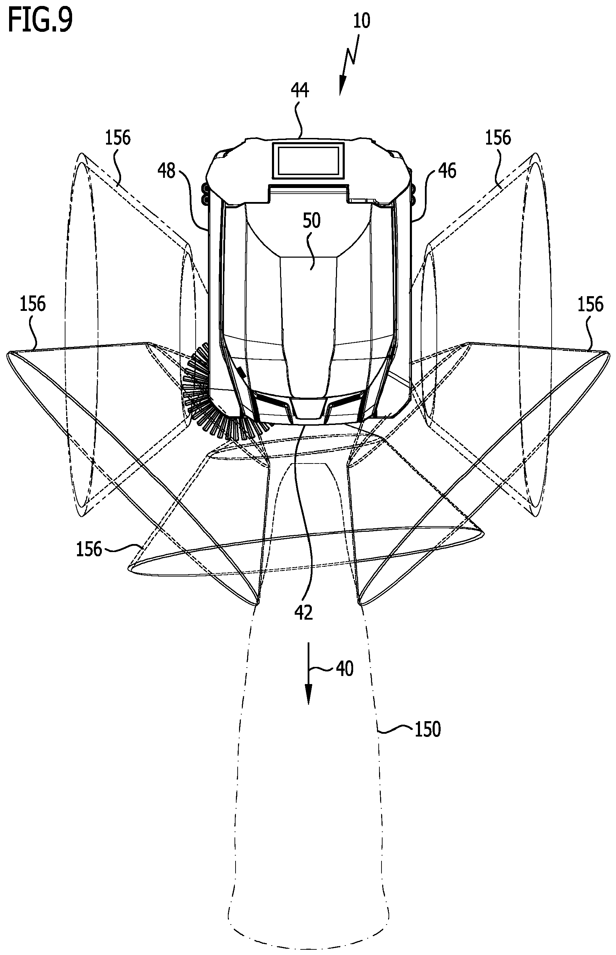

Eine Ultraschall-Messeinheit 146 ist an der Vorderseite 42 positioniert und vorliegend an der Mittellängsebene 103 angeordnet. Vorzugsweise ist der Ultraschallsensor 148 dieser Messeinheit 146 zwischen den Stereokameras 60 und 96 positioniert (Figuren 2 und 3). Der Ultraschallsensor 148 erzeugt ein in der Vorwärtsrichtung 40 gerichtetes keulenförmiges Ultraschallfeld 150 (Figur 9).

Die weiteren Messeinheiten 146 zeichnen sich im vorliegenden Beispiel insbesondere dadurch aus, dass sie jeweils paarweise nebeneinander angeordnete Ultraschallsensoren 152, 153 umfassen, die in einer gemeinsamen Aufnahme 154 angeordnet sind. Durch die paarweise Anordnung der Ultraschallsensoren 152, 153 kann über die Überwachung eines Übersprechens ein Ausfall eines der Ultraschallsensoren 152, 153 festgestellt werden. Darüber hinaus zeigt sich in der Praxis, dass insbesondere der Nahbereich durch paarweise Anordnung der Ultraschallsensoren 152, 153 besser überwacht werden kann.

Die jeweilige Messeinheit 146 mit zwei Ultraschallsensoren 152, 153 erzeugt ein im Wesentlichen trichterförmiges Ultraschallfeld 156 (Figur 9).

Als günstig kann es sich erweisen, wenn Emissionsrichtungen der Ultraschallsensoren 152, 153 schräg nach oben weg von der Bodenfläche 16 ausgerichtet sind. In der Praxis zeigt sich, dass dadurch Störeinflüsse verringert werden können. Ein Winkel zwischen der Emissionsrichtung und der Bodenfläche kann beispielsweise ungefähr 10° bis 40° betragen.

Eine erste Messeinheit 146 mit zwei Ultraschallsensoren 152, 153 ist an der Vorderseite 42 angeordnet. An den Übergangsbereichen 52 vorne links und vorne rechts ist jeweils eine weitere Messeinheit 146 mit zwei Sensoren angeordnet. Dahinter sind an den Seitenwandabschnitten 54 an der linken Seite 46 und an der rechten Seite 48 jeweils Messeinheiten 146 mit zwei Sensoren angeordnet (hiervon ist in den Figuren 2 und 3 nur eine die Messeinheit 146 aufnehmende Vertiefung gezeigt).

Die Messeinheiten 146 an den Seitenwandabschnitten 54 einerseits und an den Übergangsbereichen 52 andererseits sind symmetrisch relativ zueinander bezüglich der Mittellängsebene 103 ausgebildet.

Über die Ultraschall-Messeinheiten 146 kann eine zuverlässige Überwachung eines Nahbereichs des Bodenreinigungsgerätes 10 nach vorne, nach links und nach rechts erfolgen (Figur 9).

Nachfolgend wird auf das Bodenreinigungssystem 12 eingegangen. Das Bodenreinigungssystem 12 umfasst den bereits erwähnten Anschlussbereich 64. Am Anschlussbereich 64 ist ein Anschlusselement 158 zum Zuführen der Reinigungsflüssigkeit angeordnet sowie ein weiteres Anschlusselement 160 zum Zuführen von elektrischer Energie. Die Anschlusselemente 158, 160 sind hinter einer Abdeckung 162 positioniert.

Verfährt das Bodenreinigungsgerät 10 in eine Andockstellung an der Andockstation 14, können die Anschlusselemente 158, 160 mit korrespondierenden Anschlusselementen 164 bzw. 166 der Andockstation 14 koppeln (Figur 10). Dies erlaubt es, den Vorratsbehälter 32 zu befüllen und die elektrische Batterie 36 zu laden. Bei Andocken wird die Abdeckung 162 vorzugsweise automatisch geöffnet.

Die Stereokamera 96 sowie die Ultraschallmesseinheiten 146 an der Vorderseite 42 sind ebenso wie die Stereokamera 60 im Sensorbereich 62 angeordnet und bezüglich dem Anschlussbereich 64 versetzt. Auf diese Weise sind die Sensoreinheiten auch beim Andocken des Bodenreinigungsgerätes 10 geschützt.

Der Anschlussbereich 64 ist oberhalb des Sensorbereiches 62 und unterhalb des Lidarsystems 82 angeordnet.

Das Bodenreinigungsgerät 10 umfasst ein weiteres Anschlusselement 168, das in der Andockstellung mit einem korrespondierenden Anschlusselement 170 der Andockstation 14 koppelt. Über die Anschlusselemente 168, 170 kann der Schmutzflüssigkeitsbehälter 34 in der Andockstellung entleert werden.

Das Anschlusselement 168 ist unterhalb des Sensorbereiches 62 angeordnet und vorliegend oberhalb des Lidarsystems 112, bezogen auf die Höhenrichtung 66 (Figur 2).

### Bezugszeichenliste

- 10: Bodenreinigungsgerät
- 12: Bodenreinigungssystem
- 14: Andockstation
- 16: Bodenfläche
- 18: Gehäuse
- 20: Fahrwerk
- 22: Steuereinrichtung
- 24: Reinigungseinrichtung
- 26: Bodenreinigungskopf
- 28: Seitenbesen
- 30: Saugleiste
- 32: Vorratsbehälter
- 34: Schmutzflüssigkeitsbehälter
- 36: Batterie
- 38: Sensoreinrichtung
- 40: Vorwärtsrichtung
- 42: Vorderseite
- 44: Rückseite
- 46: linke Seite
- 48: rechte Seite
- 50: Oberseite
- 52: Übergangsbereich
- 54: Seitenwandabschnitt
- 56: Übergangsbereich
- 58: erste Abstandsmesseinheit
- 60: Stereokamerasystem
- 62: Sensorbereich
- 64: Anschlussbereich
- 66: Höhenrichtung
- 68: optische Achse
- 70: Kamera
- 72: Sichtebene
- 74: Projektionseinrichtung
- 75: RGB-Kamera
- 76: Sichtbereich
- 78: zweite Abstandsmesseinheit
- 80: Scaneinheit
- 82: Lidarsystem
- 84: Sichtebene
- 86: Sichtbereich
- 88: Abstandsmesseinheit
- 90: Scaneinheit
- 91: Sichtebene
- 92: Sichtebene
- 94: dritte Abstandsmesseinheit
- 96: Stereokamerasystem
- 98: optische Achse
- 100: Kamera
- 102: Sichtebene
- 103: Mittellängsebene
- 104: Projektionseinrichtung
- 105: RGB-Kamera
- 106: Sichtbereich
- 108: vierte Abstandsmesseinheit
- 110: Scaneinheit
- 112: Lidarsystem
- 114: Chassis
- 116: Sichtebene
- 118: Sichtbereich
- 120: Abstandsmesseinheit
- 122: Scaneinheit
- 124: Lidarsystem
- 126: Sichtebene
- 128: Sichtbereich
- 130: Abstandsmesseinheit
- 132: Stereokamerasystem
- 134: Abstandsmesseinheit
- 136: Stereokamerasystem
- 138: Übergangsbereich
- 140: Sichtbereich
- 142: Fahrspur
- 144: Sichtbereich
- 146: Ultraschall-Messeinheit
- 148: Ultraschallsensor
- 150: Ultraschallfeld
- 152: Ultraschallsensor
- 153: Ultraschallsensor
- 154: Aufnahme
- 156: Ultraschallfeld
- 158: Anschlusselement
- 160: Anschlusselement
- 162: Abdeckung
- 164: Anschlusselement
- 166: Anschlusselement
- 168: Anschlusselement
- 170: Anschlusselement

## Patentansprüche

1. Selbstfahrendes und selbstlenkendes Bodenreinigungsgerät, umfassend ein Fahrwerk (20) zum Verfahren auf der Bodenfläche (16), mindestens eine Reinigungseinrichtung (24) zum Reinigen der Bodenfläche (16), eine Steuereinrichtung (22) und eine Sensoreinrichtung (38), wobei die Steuereinrichtung (22) ausgebildet und eingerichtet ist, abhängig von mindestens einem Signal der Sensoreinrichtung (38) eine Lokalisation und/oder eine Navigation des Bodenreinigungsgerätes (10) in einer Umgebung vorzunehmen, wobei die Sensoreinrichtung (38) an einer Vorderseite (42) des Bodenreinigungsgerätes (10), bezogen auf dessen Vorwärtsrichtung (40), eine erste Abstandsmesseinheit (58) umfasst, die als Stereokamerasystem (60) ausgestaltet ist oder ein solches umfasst, und eine zweite Abstandsmesseinheit (78), die als Scaneinheit (80) mit strukturiertem Licht ausgestaltet ist oder eine solche umfasst, wobei Sichtbereiche (76, 86) der ersten Abstandsmesseinheit (58) und der zweiten Abstandsmesseinheit (78) in Vorwärtsrichtung (40) des Bodenreinigungsgerätes (10) gerichtet sind und überlappen, **dadurch gekennzeichnet, dass** die
zweite Abstandsmesseinheit (78), bezogen auf eine Höhenrichtung (66), oberhalb der ersten Abstandsmesseinheit (58) am Bodenreinigungsgerät (10) angeordnet ist.

2. Bodenreinigungsgerät nach Anspruch 1, **dadurch gekennzeichnet, dass** die Scaneinheit (80) eine Laserscaneinheit oder eine Radarscaneinheit ist und/oder dass die Scaneinheit (80) eine Mehrlagen-Scaneinheit (90) ist, die ausgebildet ist, strukturiertes Licht in einer Mehrzahl von unterschiedlichen Sichtebenen (84, 91, 92) zu emittierten.

3. Bodenreinigungsgerät nach einem der voranstehenden Ansprüche,
**dadurch gekennzeichnet, dass** zumindest eines der Folgenden gilt:
- eine Sichtebene (84, 92) der zweiten Abstandsmesseinheit (78) ist schräg nach unten auf die Bodenfläche (16) gerichtet;
- eine Sichtebene (91) der zweiten Abstandsmesseinheit (78) ist parallel zur Bodenfläche (16) ausgerichtet;
- mindestens eine optische Achse (68) der ersten Abstandsmesseinheit (58) ist parallel zur Bodenfläche (16) ausgerichtet;
- eine Sichtebene (72) der ersten Abstandsmesseinheit (58) ist parallel zur Bodenfläche (16) oder senkrecht zur Bodenfläche (16) ausgerichtet.

4. Bodenreinigungsgerät nach einem der voranstehenden Ansprüche, **dadurch gekennzeichnet, dass** die Sensoreinrichtung (38) eine dritte Abstandsmesseinheit (94) an der Vorderseite (42) umfasst, die einen in der Vorwärtsrichtung (40) ausgerichteten Sichtbereich (106) umfasst, der mit dem Sichtbereich (76) der ersten Abstandsmesseinheit (58) und/oder mit dem Sichtbereich (86) der zweiten Abstandsmesseinheit (78) überlappt.

5. Bodenreinigungsgerät nach Anspruch 4, **dadurch gekennzeichnet, dass** zumindest eines der Folgenden gilt:
- die dritte Abstandsmesseinheit (94) ist, bezogen auf die Höhenrichtung (66), unterhalb der zweiten Abstandsmesseinheit (78) und/oder oberhalb der ersten Abstandsmesseinheit (58) angeordnet;
- die dritte Abstandsmesseinheit (94) ist als Stereokamerasystem (96) ausgestaltet;
- mindestens eine optische Achse (68) der dritten Abstandsmesseinheit (94) ist parallel zur Bodenfläche (16) ausgerichtet und/ oder eine Sichtebene (102) der dritten Abstandsmesseinheit (94) ist senkrecht zur Bodenfläche (16) oder parallel zur Bodenfläche (16) ausgerichtet;
- die erste Abstandsmesseinheit (58) und die dritte Abstandsmesseinheit (94) umfassen jeweils eine Stereobasis, wobei die Stereobasen einen Winkel von 45° oder mehr zueinander einschließen, vorzugsweise von 90° oder im Wesentlichen 90°;
- die erste Abstandsmesseinheit (58) und die dritte Abstandsmesseinheit (94) weisen in Blickrichtung auf die Vorderseite (42) eine T-Anordnung oder eine Anordnung eines umgedrehten T auf.

6. Bodenreinigungsgerät nach einem der voranstehenden Ansprüche, **dadurch gekennzeichnet, dass** eine Sichtebene (72) der ersten Abstandsmesseinheit (58) oder eine Sichtebene (102) der dritten Abstandsmesseinheit (94) mit einer Mittellängsebene (103) des Bodenreinigungsgerätes (10) zusammenfällt.

7. Bodenreinigungsgerät nach einem der voranstehenden Ansprüche, **dadurch gekennzeichnet, dass** die Sensoreinrichtung (38) an der Vorderseite (42) eine vierte Abstandsmesseinheit (108) umfasst, die, bezogen auf die Höhenrichtung (66), unterhalb der ersten Abstandsmesseinheit (58) angeordnet ist und als Scaneinheit (122) mit strukturiertem Licht ausgestaltet ist oder eine solche umfasst, wobei ein Sichtbereich (128) der vierten Abstandsmesseinheit (108) mit einem Sichtbereich (76) der ersten Abstandsmesseinheit (58) und/oder einem Sichtbereich (86) der zweiten Abstandsmesseinheit (78) überlappt.

8. Bodenreinigungsgerät nach Anspruch 7, **dadurch gekennzeichnet, dass** zumindest eines der Folgenden gilt:
- bezogen auf die Höhenrichtung (66) ist ein Abstand der ersten Abstandsmesseinheit (58) von der zweiten Abstandsmesseinheit (78) ungefähr gleich einem Abstand der ersten Abstandsmesseinheit (58) von der vierten Abstandsmesseinheit (108);
- die Sensoreinrichtung (38) umfasst mindestens eine weitere Abstandsmesseinheit (120), die als Scaneinheit (122) mit strukturiertem Licht ausgestaltet ist oder eine solche umfasst, und die, bezogen auf die Vorwärtsrichtung (40), an einer Rückseite (44) des Bodenreinigungsgerätes (10) angeordnet ist, wobei vorzugsweise die Scaneinheiten (110, 122) an der Vorderseite (42) und der Rückseite (44) einander diametral gegenüberliegend am Bodenreinigungsgerät (10) angeordnet sind und/oder dass Sichtbereiche (118, 128) der Scaneinheiten (110, 122) eine 360°- oder im Wesentlichen 360°- Rundumüberwachung des Bodenreinigungsgerätes (10) ermöglichen.

9. Bodenreinigungsgerät nach einem der voranstehenden Ansprüche, **dadurch gekennzeichnet, dass** die Sensoreinrichtung (38) mindestens eine weitere Abstandsmesseinheit (130, 134) umfasst, die an einer, bezogen auf die Vorwärtsrichtung (40), linken Seite (46) oder rechten Seite (48) des Bodenreinigungsgerätes (10) angeordnet ist und einen Sichtbereich (140, 144) umfasst, der zur linken Seite oder zur rechten Seite des Bodenreinigungsgerätes (10) und auf die Bodenfläche (16) gerichtet ist.

10. Bodenreinigungsgerät nach Anspruch 9, **dadurch gekennzeichnet, dass** zumindest eines der Folgenden gilt:
- zwei weitere Abstandsmesseinheiten (130, 134) sind vorgesehen, die vorzugsweise symmetrisch relativ zueinander bezüglich einer Mittellängsebene (103) des Bodenreinigungsgerätes (10) ausgebildet sind;
- die mindestens eine weitere Abstandsmesseinheit (130, 134) ist als Stereokamerasystem (132, 136) ausgebildet;
- ein Sichtbereich (140, 144) der mindestens einen weiteren Abstandsmesseinheit (130, 134) überlappt mit einem Sichtbereich (76, 86) der ersten Abstandsmesseinheit (58) und/oder der zweiten Abstandsmesseinheit (78).

11. Bodenreinigungsgerät nach einem der voranstehenden Ansprüche, **dadurch gekennzeichnet, dass** die Sensoreinrichtung (38) mindestens eine Ultraschall-Messeinheit (146) umfasst.

12. Bodenreinigungsgerät nach Anspruch 11, **dadurch gekennzeichnet, dass** zumindest eines der Folgenden gilt:
- eine Ultraschall-Messeinheit (146) mit einem in der Vorwärtsrichtung (40) emittierenden Ultraschallsensor (148) ist an der Vorderseite (42) angeordnet;
- mindestens eine Ultraschall-Messeinheit (146) ist vorgesehen, die zwei nebeneinander angeordnete Ultraschallsensoren (152, 153) umfasst, vorzugsweise in einer gemeinsamen Aufnahme (154) an einem Gehäuse (18) des Bodenreinigungsgerätes (10);
- Ultraschall-Messeinheiten (146) sind an der Vorderseite (42) und/oder an einer linken Seite (46) und/oder rechten Seite (48) des Bodenreinigungsgerätes (10) angeordnet, beispielsweise im Bereich von vorderen Seitenwandabschnitten (54) des Bodenreinigungsgerätes (10) und/oder an einer Rückseite des Bodenreinigungsgerätes (10);
- Emissionsrichtungen von Ultraschallsensoren (152, 153) der mindestens einen Ultraschall-Messeinheit (146) sind schräg nach oben weg von der Bodenfläche (16) ausgerichtet.

13. Bodenreinigungsgerät nach einem der voranstehenden Ansprüche, **dadurch gekennzeichnet, dass** die Sensoreinrichtung (38) mindestens eine Time-of-Flight (TOF-)Abstandsmesseinheit umfasst, die vorzugsweise an der Vorderseite (42) angeordnet ist und einen in Vorwärtsrichtung (40) ausgerichteten Sichtbereich aufweist.

14. Bodenreinigungsgerät nach einem der voranstehenden Ansprüche, **dadurch gekennzeichnet, dass** das Bodenreinigungsgerät (10) mindestens ein Anschlusselement (158, 160) zum Zuführen einer für die Durchführung einer Reinigungsaufgabe erforderlichen Verbrauchskomponente für das Bodenreinigungsgerät (10) umfasst, wobei das mindestens eine Anschlusselement (158, 160) an der Vorderseite (42) angeordnet ist.

15. Bodenreinigungsgerät nach Anspruch 14, **dadurch gekennzeichnet, dass** das mindestens eine Anschlusselement (158, 160) in der Höhenrichtung (66) zwischen der ersten Abstandsmesseinheit (58) und der zweiten Abstandsmesseinheit (78) angeordnet ist und/oder dass zumindest die erste Abstandsmesseinheit (58) in einem an der Vorderseite (42) angeordneten Sensorbereich (62) angeordnet ist und dass das mindestens eine Anschlusselement (158, 160) in einem Anschlussbereich (64) an der Vorderseite (42) angeordnet ist, wobei der Sensorbereich (62) relativ zum Anschlussbereich (64) nach hinten versetzt an der Vorderseite (42) angeordnet ist.

16. Bodenreinigungssystem, umfassend ein Bodenreinigungsgerät (10) nach Anspruch 14 oder 15, und eine Andockstation (14) für dieses, die mindestens ein Anschlusselement (164, 166) zum Zuführen einer Verbrauchskomponente für das Bodenreinigungsgerät (10) umfasst, wobei in einer Andockstellung des Bodenreinigungsgerätes (10) an der Andockstation (14) das mindestens eine Anschlusselement (158, 160) des Bodenreinigungsgerätes (10) und das mindestens eine Anschlusselement (164, 166) der Andockstation (14) miteinander koppeln.

## Claims

1. Self-propelled and self-steering floor cleaning apparatus comprising a running gear (20) for traveling on the floor surface (16), at least one cleaning device (24) for cleaning the floor surface (16), a control device (22), and a sensor device (38), wherein the control device (22) is formed and configured to locate and/or navigate the floor cleaning apparatus (10) in an environment depending on at least one signal from the sensor device (38), wherein the sensor device (38) comprises on a front side (42) of the floor cleaning apparatus (10) with respect to its forward direction (40) a first distance measuring unit (58), which is configured as or comprises a stereo camera system (60), and a second distance measuring unit (78), which is configured as or comprises a scanning unit (80) with structured light, wherein viewing areas (76, 86) of the first distance measuring unit (58) and of the second distance measuring unit (78) are directed in the forward direction (40) of the floor cleaning apparatus (10) and overlap, **characterized in that** the second distance measuring unit (78) is arranged with respect to a height direction (66) above the first distance measuring unit (58) on the floor cleaning apparatus (10).

2. Floor cleaning apparatus in accordance with Claim 1, **characterized in that** the scanning unit (80) is a laser scanning unit or a radar scanning unit and/or **in that** the scanning unit (80) is a multi-layer scanning unit (90) which is formed to emit structured light in a plurality of different viewing planes (84, 91, 92).

3. Floor cleaning apparatus in accordance with any one of the preceding claims, **characterized in that** at least one of the following applies:
- a viewing plane (84, 92) of the second distance measuring unit (78) is directed obliquely downward onto the floor surface (16);
- a viewing plane (91) of the second distance measuring unit (78) is oriented parallel to the floor surface (16);
- at least one optical axis (68) of the first distance measuring unit (58) is aligned parallel to the floor surface (16);
- a viewing plane (72) of the first distance measuring unit (58) is oriented parallel to the floor surface (16) or perpendicular to the floor surface (16).

4. Floor cleaning apparatus in accordance with any one of the preceding claims, **characterized in that** the sensor device (38) comprises a third distance measuring unit (94) on the front side (42) which comprises a viewing area (106) oriented in the forward direction (40) and overlapping with the viewing area (76) of the first distance measuring unit (58) and/or with the viewing area (86) of the second distance measuring unit (78).

5. Floor cleaning apparatus in accordance with Claim 4, **characterized in that** at least one of the following applies:
- the third distance measuring unit (94) is arranged, with respect to the height direction (66), below the second distance measuring unit (78) and/or above the first distance measuring unit (58);
- the third distance measuring unit (94) is configured as a stereo camera system (96);
- at least one optical axis (68) of the third distance measuring unit (94) is aligned parallel to the floor surface (16) and/or a viewing plane (102) of the third distance measuring unit (94) is oriented perpendicular to the floor surface (16) or parallel to the floor surface (16);
- the first distance measuring unit (58) and the third distance measuring unit (94) each comprise a stereo base, wherein the stereo bases forms an angle relative to one another of 45° or more, preferably 90° or substantially 90°;
- the first distance measuring unit (58) and the third distance measuring unit (94) have a T-arrangement or an arrangement of an inverted T in the viewing direction toward the front side (42).

6. Floor cleaning apparatus in accordance with any one of the preceding claims, **characterized in that** a viewing plane (72) of the first distance measuring unit (58) or a viewing plane (102) of the third distance measuring unit (94) coincides with a central longitudinal plane (103) of the floor cleaning apparatus (10).

7. Floor cleaning apparatus in accordance with any one of the preceding claims, **characterized in that** the sensor device (38) on the front side (42) comprises a fourth distance measuring unit (108), which fourth distance measuring unit is arranged below the first distance measuring unit (58) with respect to the height direction (66), and is configured as or comprises a scanning unit (122) with structured light, wherein a viewing area (128) of the fourth distance measuring unit (108) overlaps with a viewing area (76) of the first distance measuring unit (58) and/or a viewing area (86) of the second distance measuring unit (78).

8. Floor cleaning apparatus in accordance with Claim 7, **characterized in that**, at least one of the following applies:
- with respect to the height direction (66), a distance of the first distance measuring unit (58) from the second distance measuring unit (78) is approximately equal to a distance of the first distance measuring unit (58) from the fourth distance measuring unit (108);
- the sensor device (38) comprises at least one further distance measuring unit (120) which is configured as or comprises a scanning unit (122) with structured light, and which is arranged on a rear side (44) of the floor cleaning apparatus (10) with respect to the forward direction (40), wherein preferably the scanning units (110, 122) are arranged on the front side (42) and the rear side (44) diametrically opposite one another on the floor cleaning apparatus (10), and/or that viewing areas (118, 128) of the scanning units (110, 122) enable a 360° or substantially 360° all-round monitoring of the floor cleaning apparatus (10).

9. Floor cleaning apparatus in accordance with any one of the preceding claims, **characterized in that** the sensor device (38) comprises at least one further distance measuring unit (130, 134) which is arranged on the left side (46) or right side (48) of the floor cleaning apparatus (10) with respect to the forward direction (40) and comprises a viewing area (140, 144) which is directed to the left side or to the right side of the floor cleaning apparatus (10) and to the floor surface (16).

10. Floor cleaning apparatus in accordance with Claim 9, **characterized in that** at least one of the following applies:
- two further distance measuring units (130, 134) are provided which are preferably formed symmetrically relative to one another with respect to a central longitudinal plane (103) of the floor cleaning apparatus (10);
- the at least one further distance measuring unit (130, 134) is formed as a stereo camera system (132, 136);
- a viewing area (140, 144) of the at least one further distance measuring unit (130, 134) overlaps with a viewing area (76, 86) of the first distance measuring unit (58) and/or the second distance measuring unit (78).

11. Floor cleaning apparatus in accordance with any one of the preceding claims, **characterized in that** the sensor device (38) comprises at least one ultrasound measuring unit (146).

12. Floor cleaning apparatus in accordance with Claim 11, **characterized in that** at least one of the following applies:
- an ultrasound measuring unit (146) with an ultrasound sensor (148) emitting in the forward direction (40) is arranged on the front side (42);
- at least one ultrasound measuring unit (146) is provided which comprises two ultrasound sensors (152, 153) arranged next to one another, preferably in a common receptacle (154) on a housing (18) of the floor cleaning apparatus (10);
- ultrasound measuring units (146) are arranged on the front side (42) and/or on a left side (46) and/or on the right side (48) of the floor cleaning apparatus (10), for example in the region of front side wall portions (54) of the floor cleaning apparatus (10) and/or on a rear side of the floor cleaning apparatus (10);
- emission directions of ultrasound sensors (152, 153) of the at least one ultrasound measuring unit (146) are oriented obliquely upward away from the floor surface (16).

13. Floor cleaning apparatus in accordance with any one of the preceding claims, **characterized in that** the sensor device (38) comprises at least one time-of-flight (TOF) distance measuring unit which is preferably arranged on the front side (42) and has a viewing area oriented in the forward direction (40).

14. Floor cleaning apparatus in accordance with any one of the preceding claims, **characterized in that** the floor cleaning apparatus (10) comprises at least one connecting element (158, 160) for supplying a consumption component for the floor cleaning apparatus (10) required for carrying out a cleaning task, wherein the at least one connecting element (158, 160) is arranged on the front side (42).

15. Floor cleaning apparatus in accordance with Claim 14, **characterized in that** the at least one connecting element (158, 160) is arranged in the height direction (66) between the first distance measuring unit (58) and the second distance measuring unit (78) and/or **in that** at least the first distance measuring unit (58) is arranged in a sensor region (62) arranged on the front side (42), and **in that** the at least one connecting element (158, 160) is arranged on the front side (42) in a connection region (64), wherein the sensor region (62) is arranged offset to the rear relative to the connection region (64) on the front side (42).

16. Floor cleaning system comprising a floor cleaning apparatus (10) in accordance with Claim 14 or 15, and a docking station (14) for this purpose, comprising at least one connecting element (164, 166) for supplying a consumption component for the floor cleaning apparatus (10), wherein, in a docking position of the floor cleaning apparatus (10) at the docking station (14), the at least one connecting element (158, 160) of the floor cleaning apparatus (10) and the at least one connecting element (164, 166) of the docking station (14) couple to one another.

## Revendications

1. Appareil de nettoyage de sol autonome et autoguidé, comprenant un châssis roulant (20) pour se déplacer sur la surface du sol (16), au moins un dispositif de nettoyage (24) pour nettoyer la surface du sol (16), un dispositif de commande (22) et un dispositif de capteurs (38), le dispositif de commande (22) étant conçu et agencé pour effectuer, en fonction d'au moins un signal du dispositif de capteurs (38), une localisation et/ou une navigation de l'appareil de nettoyage de sol (10) dans un environnement, le dispositif de capteurs (38) comprenant, sur une face avant (42) de l'appareil de nettoyage de sol (10), par rapport à sa direction de marche avant (40), une première unité de mesure de distance (58) qui est conçue ou comprend un système de caméras stéréoscopiques (60), et une deuxième unité de mesure de distance (78) qui est conçue ou comprend une unité de balayage (80) à lumière structurée, les zones de vision (76, 86) de la première unité de mesure de distance (58) et de la deuxième unité de mesure de distance (78) étant dirigées dans la direction de marche avant (40) de l'appareil de nettoyage de sol (10) et se chevauchant,
**caractérisé en ce que**
la deuxième unité de mesure de distance (78) est disposée sur l'appareil de nettoyage de sol (10), par rapport à une direction verticale (66), au-dessus de la première unité de mesure de distance (58).

2. Appareil de nettoyage de sol selon la revendication 1, **caractérisé en ce que** l'unité de balayage (80) est une unité de balayage laser ou une unité de balayage radar et/ou **en ce que** l'unité de balayage (80) est une unité de balayage multi-couches (90) qui est conçue pour émettre de la lumière structurée dans une pluralité de plans de vision différents (84, 91, 92).

3. Appareil de nettoyage de sol selon l'une des revendications précédentes,
**caractérisé en ce qu'**au moins l'un des éléments suivants s'applique :
- un plan de vision (84, 92) de la deuxième unité de mesure de distance (78) est dirigé obliquement vers le bas sur la surface du sol (16) ;
- un plan de vision (91) de la deuxième unité de mesure de distance (78) est aligné parallèlement à la surface du sol (16) ;
- au moins un axe optique (68) de la première unité de mesure de distance (58) est aligné parallèlement à la surface du sol (16) ;
- un plan de vision (72) de la première unité de mesure de distance (58) est aligné parallèlement à la surface du sol (16) ou perpendiculairement à la surface du sol (16).

4. Appareil de nettoyage de sol selon l'une des revendications précédentes,
**caractérisé en ce que** le dispositif de capteurs (38) comprend une troisième unité de mesure de distance (94) sur la face avant (42), laquelle comprend une zone de vision (106) orientée dans la direction de marche avant (40) qui se chevauche avec la zone de vision (76) de la première unité de mesure de distance (58) et/ou avec la zone de vision (86) de la deuxième unité de mesure de distance (78).

5. Appareil de nettoyage de sol selon la revendication 4, **caractérisé en ce que**
au moins l'un des éléments suivants s'applique :
- la troisième unité de mesure de distance (94) est disposée, par rapport à la direction verticale (66), en dessous de la deuxième unité de mesure de distance (78) et/ou au-dessus de la première unité de mesure de distance (58) ;
- la troisième unité de mesure de distance (94) est conçue comme un système de caméras stéréoscopiques (96) ;
- au moins un axe optique (68) de la troisième unité de mesure de distance (94) est aligné parallèlement à la surface du sol (16) et/ou un plan de vision (102) de la troisième unité de mesure de distance (94) est aligné perpendiculairement à la surface du sol (16) ou parallèlement à la surface du sol (16) ;
- la première unité de mesure de distance (58) et la troisième unité de mesure de distance (94) comprennent chacune une base stéréoscopique, les bases stéréoscopiques formant entre elles un angle de 45° ou plus, de préférence de 90° ou sensiblement 90° ;
- la première unité de mesure de distance (58) et la troisième unité de mesure de distance (94) présentent, dans la direction du regard vers la face avant (42), une disposition en T ou une disposition en T inversé.

6. Appareil de nettoyage de sol selon l'une des revendications précédentes,
**caractérisé en ce qu'**un plan de vision (72) de la première unité de mesure de distance (58) ou un plan de vision (102) de la troisième unité de mesure de distance (94) coïncide avec un plan longitudinal médian (103) de l'appareil de nettoyage de sol (10).

7. Appareil de nettoyage de sol selon l'une des revendications précédentes,
**caractérisé en ce que** le dispositif de capteurs (38) comprend, sur la face avant (42), une quatrième unité de mesure de distance (108) qui est disposée, par rapport à la direction verticale (66), en dessous de la première unité de mesure de distance (58) et qui est conçue ou comprend une unité de balayage (122) à lumière structurée, une zone de vision (128) de la quatrième unité de mesure de distance (108) se chevauchant avec une zone de vision (76) de la première unité de mesure de distance (58) et/ou une zone de vision (86) de la deuxième unité de mesure de distance (78).

8. Appareil de nettoyage de sol selon la revendication 7, **caractérisé en ce que**
au moins l'un des éléments suivants s'applique :
- par rapport à la direction verticale (66), une distance de la première unité de mesure de distance (58) à la deuxième unité de mesure de distance (78) est approximativement égale à une distance de la première unité de mesure de distance (58) à la quatrième unité de mesure de distance (108) ;
- le dispositif de capteurs (38) comprend au moins une autre unité de mesure de distance (120) qui est conçue ou comprend une unité de balayage (122) à lumière structurée et qui est disposée, par rapport à la direction de marche avant (40), sur une face arrière (44) de l'appareil de nettoyage de sol (10), les unités de balayage (110, 122) étant de préférence disposées diamétralement opposées l'une à l'autre sur l'appareil de nettoyage de sol (10) sur la face avant (42) et la face arrière (44) et/ou les zones de vision (118, 128) des unités de balayage (110, 122) permettant une surveillance à 360° ou sensiblement à 360° de l'appareil de nettoyage de sol (10).

9. Appareil de nettoyage de sol selon l'une des revendications précédentes,
**caractérisé en ce que** le dispositif de capteurs (38) comprend au moins une autre unité de mesure de distance (130, 134) qui est disposée sur un côté gauche (46) ou un côté droit (48) de l'appareil de nettoyage de sol (10), par rapport à la direction de marche avant (40), et qui comprend une zone de vision (140, 144) dirigée vers le côté gauche ou vers le côté droit de l'appareil de nettoyage de sol (10) et vers la surface du sol (16).

10. Appareil de nettoyage de sol selon la revendication 9, **caractérisé en ce qu'**au moins l'un des éléments suivants s'applique :
- deux autres unités de mesure de distance (130, 134) sont prévues, lesquelles sont de préférence conçues symétriquement l'une par rapport à l'autre par rapport à un plan longitudinal médian (103) de l'appareil de nettoyage de sol (10) ;
- l'au moins une unité de mesure de distance supplémentaire (130, 134) est conçue comme un système de caméras stéréoscopiques (132, 136) ;
- une zone de vision (140, 144) de l'au moins une unité de mesure de distance supplémentaire (130, 134) se chevauche avec une zone de vision (76, 86) de la première unité de mesure de distance (58) et/ou de la deuxième unité de mesure de distance (78).

11. Appareil de nettoyage de sol selon l'une des revendications précédentes,
**caractérisé en ce que** le dispositif de capteurs (38) comprend au moins une unité de mesure à ultrasons (146).

12. Appareil de nettoyage de sol selon la revendication 11, **caractérisé en ce qu'**au moins l'un des éléments suivants s'applique :
- une unité de mesure à ultrasons (146) avec un capteur à ultrasons (148) émettant dans la direction de marche avant (40) est disposée sur la face avant (42) ;
- au moins une unité de mesure à ultrasons (146) est prévue, laquelle comprend deux capteurs à ultrasons (152, 153) disposés l'un à côté de l'autre, de préférence dans un logement commun (154) sur un boîtier (18) de l'appareil de nettoyage de sol (10) ;
- des unités de mesure à ultrasons (146) sont disposées sur la face avant (42) et/ou sur un côté gauche (46) et/ou un côté droit (48) de l'appareil de nettoyage de sol (10), par exemple dans la zone de sections de paroi latérale avant (54) de l'appareil de nettoyage de sol (10) et/ou sur une face arrière de l'appareil de nettoyage de sol (10) ;
- les directions d'émission des capteurs à ultrasons (152, 153) de l'au moins une unité de mesure à ultrasons (146) sont orientées de manière oblique vers le haut en s'éloignant de la surface du sol (16).

13. Appareil de nettoyage de sol selon l'une des revendications précédentes,
**caractérisé en ce que** le dispositif de capteurs (38) comprend au moins une unité de mesure de distance à temps de vol (TOF), laquelle est de préférence disposée sur la face avant (42) et présente une zone de vision orientée dans la direction de marche avant (40).

14. Appareil de nettoyage de sol selon l'une des revendications précédentes,
**caractérisé en ce que** l'appareil de nettoyage de sol (10) comprend au moins un élément de raccordement (158, 160) pour l'alimentation d'un composant consommable nécessaire à l'exécution d'une tâche de nettoyage pour l'appareil de nettoyage de sol (10), le ou les éléments de raccordement (158, 160) étant disposés sur la face avant (42).

15. Appareil de nettoyage de sol selon la revendication 14, **caractérisé en ce que** l'au moins un élément de raccordement (158, 160) est disposé, dans la direction verticale (66), entre la première unité de mesure de distance (58) et la deuxième unité de mesure de distance (78) et/ou **en ce qu'**au moins la première unité de mesure de distance (58) est disposée dans une zone de capteurs (62) disposée sur la face avant (42) et **en ce que** l'au moins un élément de raccordement (158, 160) est disposé dans une zone de raccordement (64) sur la face avant (42), dans lequel la zone de capteurs (62) est disposée en retrait vers l'arrière sur la face avant (42) par rapport à la zone de raccordement (64).

16. Système de nettoyage de sol, comprenant un appareil de nettoyage de sol (10) selon la revendication 14 ou 15, et une station d'accueil (14) pour celui-ci, laquelle comprend au moins un élément de raccordement (164, 166) pour l'alimentation d'un composant consommable pour l'appareil de nettoyage de sol (10), dans lequel, dans une position d'accueil de l'appareil de nettoyage de sol (10) à la station d'accueil (14), l'au moins un élément de raccordement (158, 160) de l'appareil de nettoyage de sol (10) et l'au moins un élément de raccordement (164, 166) de la station d'accueil (14) se couplent entre eux.
